# EUROPEAN PATENT SPECIFICATION

(11) **EP 1 248 188 B1**
(45) Date of publication and mention of the grant of the patent: **20.09.2017**
(21) Application number: 02710388.6
(22) Date of filing: 30.01.2002
(51) Int. Cl.: H04L 29/06, H04W 12/10, G06Q 20/34, G07F 7/10, H04M 1/725, H04W 8/24, G06F 9/06, G06F 9/445

(54) **SYSTEM FOR DELIVERING PROGRAM TO STORAGE MODULE OF MOBILE TERMINAL**
SYSTEM ZUM SENDEN EINES PROGRAMMS ZU EINEM SPEICHERMODUL VON MOBILEN ENDGERäTE
SYSTÈME D'ENVOI DE PROGRAMME À UN MODULE DE MÉMOIRE DE TERMINAUX MOBILES

(30) Priority: 31.01.2001 JP 2001024738; 22.03.2001 JP 2001083567
(43) Date of publication of application: 09.10.2002
(73) Proprietor: NTT DoCoMo, Inc., Tokyo 100-6150 (JP)
(72) Inventor: NATSUNO, Takeshi c/o NTT DoCoMo Inc. Int.Prop.Dept, Chiyoda-ku, Tokyo 100-6150 (JP); ITAGAKI, Takatoshi C/o NTT DoCoMo Inc. Int.Pr.Dept, Chiyoda-ku, Tokyo 100-6150 (JP); MORIGUCHI, Atsushi c/o NTT DoCoMo Inc Int Pr.Dept, Chiyoda-ku, Tokyo 100-6150 (JP)
(74) Representative: Hoffmann Eitle
(86) International application number: PCT/JP2002/000699
(87) International publication number: WO 2002/061572

(56) References cited:
- WO-A1-00/40048
- WO-A1-00/65855
- WO-A1-00/79818
- JP-A- 6 195 217
- JP-A- 10 078 867
- JP-A- 2000 293 584
- JP-A- 2001 028 786

## Description

### TECHNICAL FIELD

The present invention relates to a technique for distributing a program (application or applet) to a storage module built or mounted in a mobile terminal.

### BACKGROUND ART

In recent years, a mobile terminal has been developed which has a program executing environment. An example of a mobile terminal of this type is one which has a Java virtual machine. The user installs a program in the mobile terminal and thus can add a desired function to the mobile terminal.

However, even if desirable functions are added to a mobile terminal, a user is liable to become tired of using the same mobile terminal after a protracted period. On the other hand, the mobile terminal industry suffers fierce competition and various new products, attractive to users, have been successively placed on the market. A user may want to change his mobile terminal with a new desirable product placed on the market. Once the mobile terminal is replaced, however, the functions that have hitherto been added to the old mobile terminal cannot be used any longer. If the same functions are to be used even after the change of a mobile terminal, the programs that have been installed in the old mobile terminal have to be installed in the new mobile terminal. This is a troublesome job.

WO 00/65855 A1 relates to a method for downloading software. Here, software is downloaded from a mobile network operator to a mobile phone user. First, software is broadcasted, and then received and downloaded to a mobile communication device. Afterwards, a network operator responsible for broadcasting is contacted who is caused to enable the software so that the software is available for the use by a user of the mobile device.

WO 00/79818 A1 relates to an apparatus and method for loading a mobile terminal with an application program installed at a peer device. An apparatus is provided for selective downloading of an application program stored at a provider mobile terminal to a recipient mobile terminal. The content includes indicia of the entity having property rights in the application program. Content, executable by processing circuitry of a mobile terminal is typically stored at a memory device. Authenticode can be used to verify the origin and integrity of downloaded content.

WO 00/40048 relates to a mobile terminal for telecommunications and remote SIM-card programming. A subscriber identification module (SIM) of a terminal can be selectively configured so as to allow a user to load into/cancels from the same module application programs for the access to respective services. The application programs are received by the terminal within so-called short messages of the system, for example.

### DISCLOSURE OF THE INVENTION

This invention has been achieved in view of the situation described above, and the object thereof is to provide a system in which even after a mobile terminal is changed, the programs that could be used before the change of the mobile terminal, can be continuously used after the change.

In order to achieve this object, the present inventors have taken notice of a certain type of a mobile terminal, that is to say, a mobile terminal capable of being mounted or having fitted therein a module for storing the subscriber information including the subscriber number and the memory dial information (hereinafter referred to as the user ID module or UIM). The user of this type of the mobile terminal, whenever desirous of changing it with a new mobile terminal, can use the new mobile terminal in similar manner simply by mounting or building into the new mobile terminal the UIM which he may have. In connection with this, the present inventors have come up with the following idea. Specifically, once a program is stored in this UIM, the program used with the old mobile terminal can be easily transferred to the new mobile terminal for an improved operating convenience of the user.

Nevertheless, the problem of security has been an obstacle to realizing such a novel mobile terminal.

First, as long as no limit is set on the operation of writing a program in the UIM, the inherent functions of the mobile terminal may be undesirably destroyed intentionally or negligently.

Also, the subscriber information stored in the UIM may include the personal information or data having monetary value. From the viewpoint of security, therefore, careful consideration is necessary not to cause the leakage of this information in writing a program in the UIM.

These problems are solved by the independent claims. Advantageous embodiments are described in the dependent claims.

There is provided a program distribution system comprising a mobile terminal having means for transmitting a program distribution request, a storage module built in or connected to the mobile terminal, a contents server for receiving the distribution request and transmitting a program to be distributed, and a distribution management server for receiving the program from the contents server and, as long as the contents server is authorized, transmitting the program received from the contents server to the storage module built in or connected to the mobile terminal, characterized in that the storage module includes a storage unit, and a control unit for storing in the storage unit the program received from the distribution management server through the mobile terminal and executing the program stored in the storage unit in response to a request.

There is provided a program distribution system comprising a mobile terminal having means for transmitting a program distribution request, a storage module built in or connected to the mobile terminal, and a distribution management server for receiving the distribution request; and in the case where the program to be distributed is provided by the authorized contents server, acquiring and transmitting the program to the storage module built in or connected to the mobile terminal, characterized in that the storage module includes a storage unit, and a control unit for receiving the information through the mobile terminal, storing the information in the storage unit only in the case where the information is the program received from the distribution management server and executing the program stored in the storage unit in response to a request.

With these systems, only a program supplied through the distribution management server from an authorized contents server is written in the storage module and therefore, the user can write a new program in the storage module with guaranteed security.

### BRIEF DESCRIPTION OF THE DRAWINGS

Fig. 1 is a block diagram showing a configuration of a program distribution system according to a first embodiment of the invention.
Fig. 2 shows the external appearance of a mobile terminal according to the same embodiment.
Fig. 3 is a block diagram showing a configuration of the same mobile terminal.
Fig. 4 is a diagram showing a configuration of the same mobile terminal and the UIM built in or connected to it.
Fig. 5 is a sequence diagram showing the process from program distribution to activation according to the same embodiment.
Fig. 6 is a sequence diagram showing the program distribution operation according to the same embodiment.
Fig. 7 is a diagram showing a display screen of the mobile terminal at the time of program distribution.
Fig. 8 is a sequence diagram showing the program activation operation according to the same embodiment.
Fig. 9 is a sequence diagram showing the processes of the program deactivation in compliance with a request from the contents server according to the same embodiment.
Fig. 10 is a sequence diagram showing the process of the program delete operation in compliance with a request from the contents server according to the same embodiment.
Fig. 11 is a sequence diagram showing the process of the program deactivate operation and the program delete operation in compliance with a request from the distribution management server according to the same embodiment.
Fig. 12 is a sequence diagram of the UIM exchanging the version information according to the same embodiment.
Fig. 13 is a sequence diagram showing the process ending in a program distribution failure due to a memory shortage.
Fig. 14 is a sequence diagram showing the process ending in a program distribution failure due to a memory error.
Fig. 15 is a diagram showing a display screen provided to the user at the time of program deletion.
Fig. 16 is a diagram showing a display screen provided to the user at the time of account settlement for an electronic commercial transaction.
Fig. 17 is a diagram showing a display screen provided to the user at the time of commodity purchase in male order sale.
Fig. 18 is a diagram showing a display screen for setting the automatic program start.

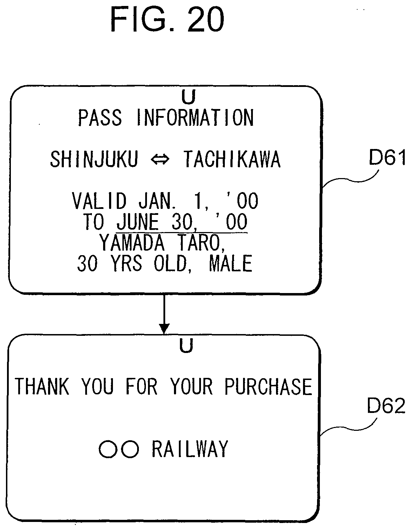

Figs. 19 and 20 are diagrams showing a display screen at the time of using a commutation pass.
Fig. 21 is a block diagram showing a configuration of a program distribution system according to a second embodiment of the invention.
Fig. 22 is a diagram showing a configuration of a memory in the UIM according to the same embodiment.
Fig. 23 is a block diagram showing a configuration of a distribution management server 16A according to the same embodiment.
Fig. 24 is a sequence diagram showing the process for registration in a user information storage unit.
Figs. 25 and 26 are sequence diagrams showing the operation of registering a program registered in the user information storage unit, in any of the basic blocks of the UIM 12.
Figs. 27 and 28 are sequence diagrams showing the operation of registering a program registered in the user information storage unit, in any of the basic blocks of the UIM.
Fig. 29 is a sequence diagram showing the operation of deleting a program registered in the user information storage unit 51.
Fig. 30 is a sequence diagram showing the operation of deleting a program registered in the basic blocks of the UIM.
Fig. 31 is a sequence diagram showing the deactivation process for the user information storage unit.
Fig. 32 is a sequence diagram showing the deactivation process for the basic blocks.

### BEST MODE FOR CARRYING OUT THE INVENTION

Now, preferred embodiments of the invention will be explained with reference to the drawings.

### [1] First embodiment

### [1.1] General configuration of program distribution system

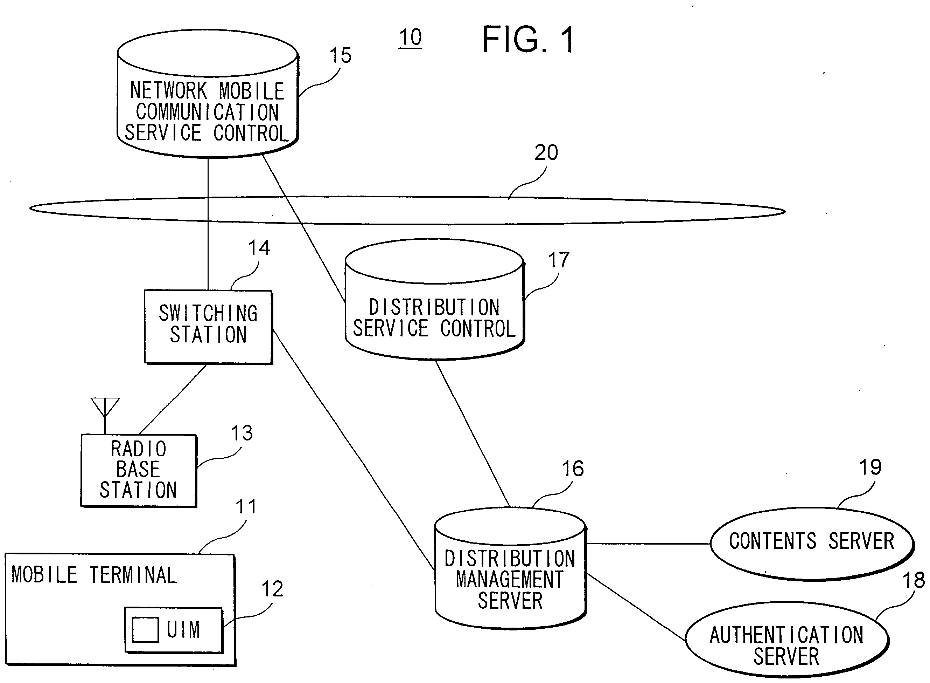

Fig. 1 is a block diagram showing a configuration of a program distribution system according to a first embodiment of the invention.

A program distribution system 10 roughly comprises a mobile terminal 11, a radio base station 13, a switching station 14, a network mobile communication service control unit 15, a distribution management server 16, a distribution service control unit 17, an authentication server 18, a contents server 19 and a public network 20.

The mobile terminal 11 is an information processing unit, for example, having communication functions such as a portable telephone or a PHS (Personal Handyphone System (registered trade name)). Further, the mobile terminal 11 has mounted or built therein a UIM (User Identification Module) 12 capable of storing various programs or data.

The radio base station 13 communicates with the mobile terminal 11 through a radio link.

The switching station 14 controls the switching operation between the mobile terminal 11 and a common channel interoffice signal network 20 constituting a wire network, connected to each other through the radio base station 13.

The network mobile communication service control unit 15 controls the communication in the case where a program is distributed to the mobile terminal 11 through the public network 20.

The contents server 19 distributes various contents on the one hand and distributes a program as requested from the mobile terminal 11 on the other.

The distribution management server 16 relays and manages the distribution of a program from the contents server 19 to the UIM 12. The distribution of a program to the UIM 12 and access to a program stored in the UIM 12 are carried out always through the distribution management server 16. This is the most significant feature of this embodiment.

The distribution service control unit 17 operates like an interface between the distribution management server 16 and the public network 20 in the case where a program is distributed through the public network 20.

The authentication server 18 is a device for issuing a certificate required for program distribution to the contents server 19. This certificate includes a UIM public key having the function of explaining, for the benefit of the UIM 12, that the contents server 19 is duly authorized to distribute a program to the UIM 12, and a distribution management server public key having the function of certifying, for the benefit of the distribution management server 16, that the contents server 19 is similarly authorized.

The contents server 19, the distribution management server 16 and the authentication server 18 according to this embodiment have the following functions, respectively.
(a) According to this embodiment, the contents server 19 sends a program addressed to the UIM 12, to the distribution management server 16, which in turn distributes the program to the UIM 12. The contents server 19 never distributes the program directly to the UIM 12.
(b) The contents server 19 distributes a program to the UIM 12 by encrypted communication of a public-key type with the distribution management server 16 as an intermediary. The UIM 12 of each user is equipped with a PKI (public key infrastructure), and each UIM 12 has a UIM private key unique to the particular UIM 12. For distributing a program addressed to a given UIM 12, the contents server 19 acquires a UIM public key paired with a UIM private key for the particular UIM 12, whereby the program is encrypted.
(c) According to this invention, only an authorized contents server 19 can distribute a program addressed to the UIM 12. The authorized contents server 19 is assigned a distribution management server public key. The contents server 19, upon receipt of a distribution request from the mobile terminal 11, further encrypts, by the distribution management server public key, the program already encrypted by the UIM public key and addressed to the UIM 12, and sends it to the distribution management server 16.

### [1.2] Configuration of mobile terminal

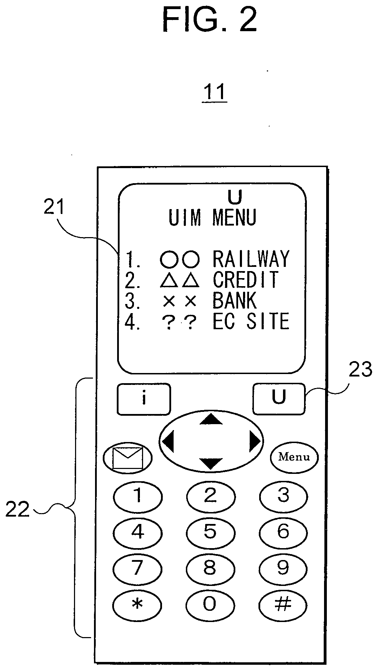

Fig. 2 shows the external appearance of the mobile terminal 11.

The mobile terminal 11 includes a display section 21 and an operating section 22.

As shown in Fig. 2, various processing menu items, the screen being browsed, the telephone number screen, etc. are displayed on the display section 21.

The operating section 22 has a plurality of operating buttons for inputting various data and displaying menu item screens. One of the operating buttons of the operating unit 22 is a UIM button 23. The UIM button 23 is operated by the user for utilizing a program stored in the UIM 12.

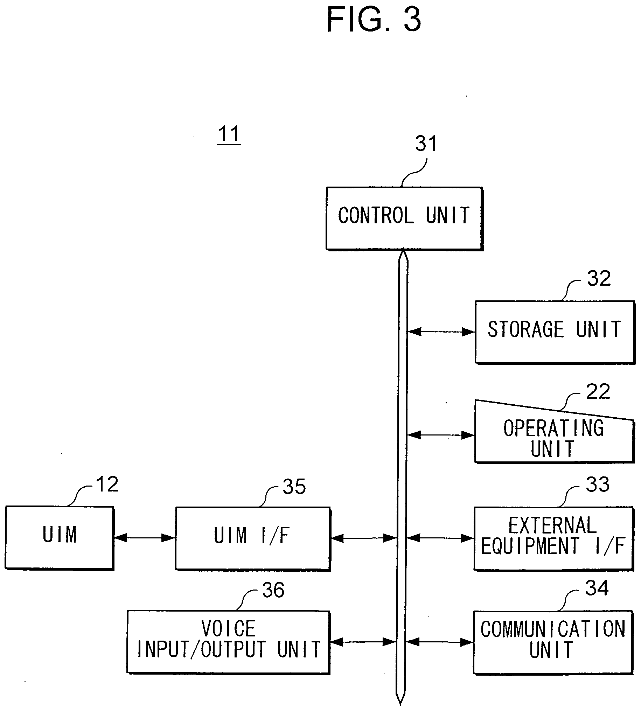

Fig. 3 is a block diagram showing a configuration of a mobile terminal.

The mobile terminal 11 includes a display section 21, an operating section 22, a control unit 31, a storage unit 32, an external equipment interface (I/F) unit 33, a communication unit 34, a UIM interface (I/F) unit 35 and an voice input/output unit 36.

The control unit 31 controls the various parts of the mobile terminal 11 based on the control data and the control program stored in the storage unit 32.

The storage unit 32 is configured of a ROM, a RAM, etc., and has a plurality of storage areas including a program storage area for storing various programs such as a browser for accessing an internet and a data storage area for storing various data.

The external equipment I/F unit 33 is an interface utilized by the control unit 31 and the UIM 12 for exchanging information with an external device.

The communication unit 34 transmits various data including audio and text messages to the radio base station 13 through the antenna 34A under the control of the control unit 31 on the one hand, and receives various data sent to the mobile terminal 11 through the antenna 34A on the other hand.

The UIM I/F unit 35 inputs/outputs data from and to the control unit 31. The UIM I/F unit 35 also outputs the output data from the communication unit 34 or the external equipment I/F unit 33 to the UIM 12 without the intermediation of the control unit 31. Also, the output data of the UIM 12 is output directly to the external equipment I/F unit 33 or the communication unit 34 directly without the intermediation of the control unit 31. The reason why the data are input/output from and to the external equipment I/F 33 or the communication unit 34 without the intermediation of the control unit 31, is in order to prevent an illegal access to the data on the UIM 12 by the alteration of the control program of the control unit 31 and thus to maintain security.

### [1.3] Configuration of UIM

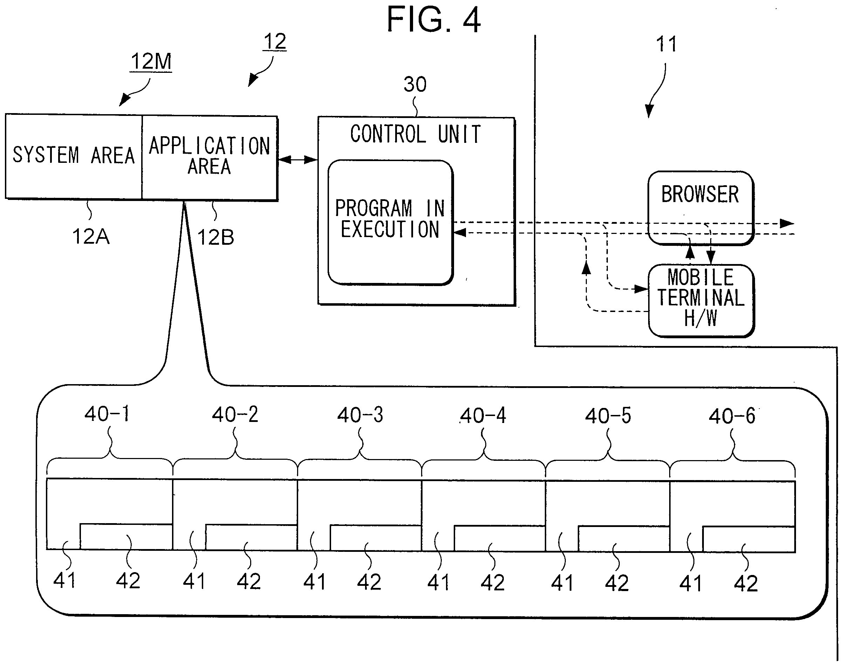

Fig. 4 shows a configuration of the UIM 12. In Fig. 4, a part of the component elements of the mobile terminal 11 are shown together with the component elements of the UIM 12 to clarify the relation with the mobile terminal 11. As shown in Fig. 4, the UIM 12 includes a memory 12M, which in turn, roughly, has a system area 12A and an application area 12B.

The system area 12A has stored therein personal information data unique to each user such as subscriber number data, outgoing call history information data, incoming call history information data, speech time information data and a UIM private key. The mobile terminal 11 communicates with other communication units using the subscriber number data in the system area 12A as a calling line identity.

The application area 12B is for storing the program distributed and the data used at the time of execution of the program, and divided into a plurality of basic blocks. In the case shown in Fig. 4, the application area 12B is divided into six basic blocks 40-1 to 40-6.

The basic blocks 40-1 to 40-6 each include a program area 41 and a data area 42. The program area 41 of each basic block 40-k has stored therein a program (an application or an applet). The data area 42 of each basic block 40-k, on the other hand, has stored therein the data used at the time of executing the program in the program area 41 of the same basic block 40-k.

The basic blocks 40-1 to 40-6 are independent of each other, and are basically so managed that the application or the applet stored in the program area 41 of a given basic block 40-j cannot access the data area 42 of another basic block 40-k (≠ j). By employing this configuration, the security of each program is maintained. Even in the case where data having a monetary value (what is called "a value") are recorded in the data area 42 of a given basic block 40-j, therefore, the particular data is never rewritten, intentionally or incidentally, by a program stored in another basic block 40-k (≠ j).

The application or the applet constituting a program stored in the program area 41, on the other hand, cannot be distributed or deleted without the intermediary of the distribution management server 16. The data area 42, however, can be operated directly through the distribution management server 16 or a local terminal as in the case where the electronic money is downloaded from an ATM.

Further, the application area 12 has a storage area for an activation flag indicating whether the program in the program area 41 of each of the basic blocks 40-1 to 40-6 can be executed or not.

The control unit 30 is a means for writing a program for the basic block of the application area 12B, setting or resetting the activation flag corresponding to each basic block or executing a program in a designated basic block, in response to a request given through the mobile terminal 11. Upon arrival of a program encrypted by the UIM public key from the distribution management server 16, the control unit 30 decrypts the program using the UIM private key in the system area 12 and writes it in a basic block. Also, the control unit 30 can execute the program in the basic block. In the process, the information required by the program in execution is acquired from the other party of the communication in the network or from the user of the mobile terminal 11 through the browser executed by the mobile terminal 11. The control unit 30 can also send the result of program execution to the other party of communication in the network or send it to the user of the mobile terminal 11 through the browser. Also, the control unit 30 can exchange information with external devices through the hardware resources of the mobile terminal 11 without the intermediary of the browser in accordance with the program in the basic block. An example of a program available for this purpose is an application program for causing the mobile terminal 11 to function as a commutation pass. In executing this program, the control unit 30 can exchange the pass information with the card reader/writer at the gates of a railway station utilizing a short-range radio unit (not shown) connected to the external equipment I/F of the mobile terminal 30. The program for the control unit 30 to perform the various processes described above, including the execution and control of the program in the application area is stored in the system area 12A.

### [1.4] Operation of first embodiment

Now, the operation of the first embodiment will be explained taking the distribution of the commutation pass applet as an example.

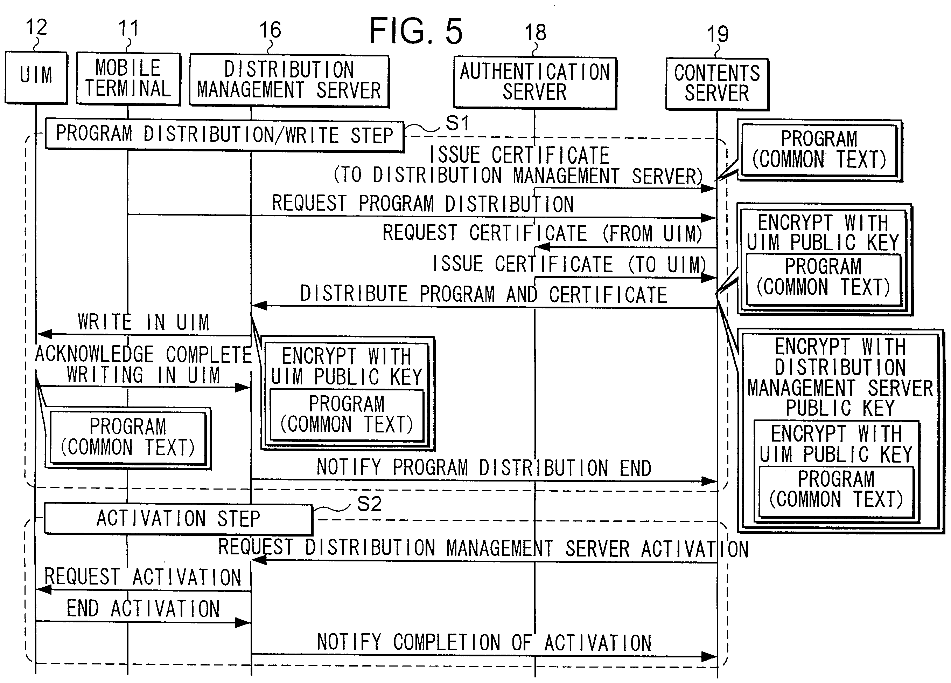

Fig. 5 is a sequence diagram showing the process of program distribution, write operation and activation.

As shown in Fig. 5, these series of processes are roughly configured of the step of distributing an inactive program (applet) as a memory module to the UIM 12 and writing it in the UIM 12 (step S1), and an activation step for activating the program written (step S2).

### [1.4.1] Issue of certificate to distribution management server

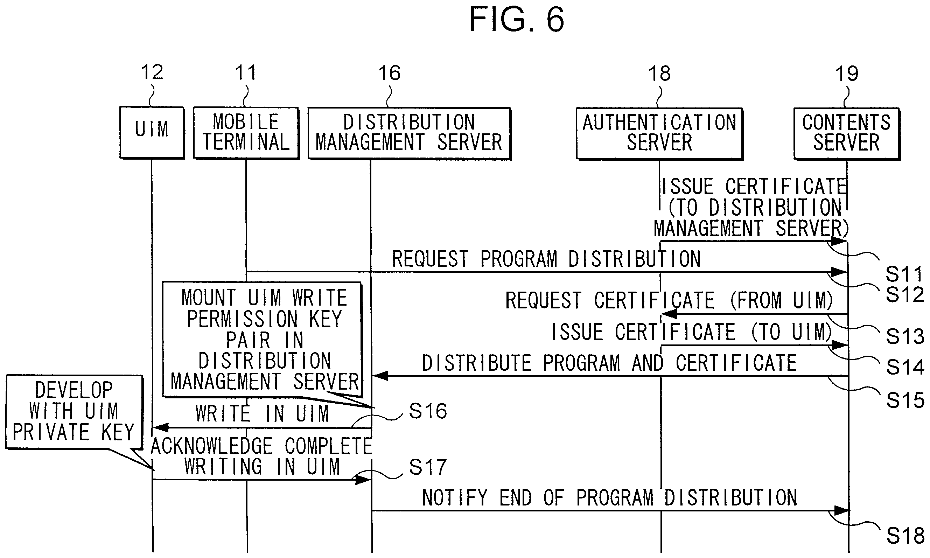

Fig. 6 is a sequence diagram showing the process of distributing a program and writing it in the UIM 12. As shown in Fig. 6, the authentication server 18 issues a certificate to the contents server 19 permitted to distribute the program addressed to the UIM 12 (step S11). The certificate is issued to enable the contents server 19 and the distribution management server 16 to perform the encryption communication based on the public key encryption method. Specifically, in order to make possible the encryption communication using a public key, a distribution management server private key and a distribution management server public key, constituting a pair, are generated. The distribution management server private key is stored in the distribution management server 16, while the distribution management server public key is transmitted from the authentication server 18 to the contents server 19 as a certificate identifying a person permitted to distribute a program. The contents server 19, upon receipt of the distribution management server public key, stores it in preparation for program distribution.

### [1.4.2] Program distribution request

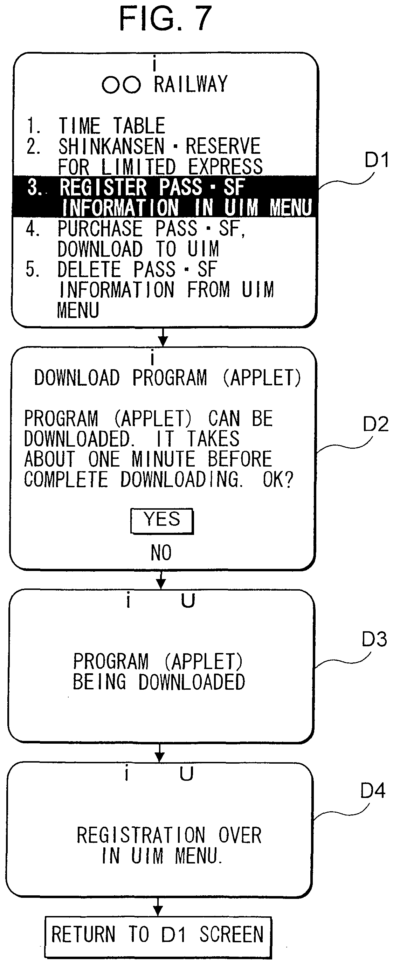

The user can cause the control unit 31 to execute the browser and thus can access the home page of the contents provider by operating the operating section 22 of the mobile terminal 11. As a result of this access, a distribution menu screen D1 indicating the program distribution performed by the contents server 19 of the contents provider is displayed, as shown in Fig. 7, on the display section 21 of the mobile terminal 11. Under this condition, the user transmits a program (applet) distribution request from the mobile terminal 11 through the network to the contents server 19 by operating the operating section 22 of the mobile terminal 11 (step S12).

### [1.4.3] Certificate issue request to UIM

The contents server 19, upon receipt of a distribution request from the mobile terminal 11, sends a certificate issue request to the authentication server 18 (step S12). This certificate issue request contains the information for specifying the UIM 12 of the mobile terminal 11. The certificate issue is requested in order to enable the contents server 19 to conduct the encryption communication of public key type with the UIM 12. More specifically, in order to make possible the encryption communication of public key type, the UIM private key and the UIM public key paired with the former are generated in advance, and the UIM private key is stored in the UIM 12 in advance, while the UIM public key is stored in the authentication server 18 in advance. In step S12, the UIM public key stored in the authentication server 18 is requested as a certificate of a person permitted to distribute a program addressed to the UIM 12.

### [1.4.4] Issue of certificate and distribution of program with certificate to UIM

The authentication server 18, upon receipt of a certificate issue request from the contents server 19, issues to the contents server 19 a UIM public key as a certificate corresponding to the UIM 12 specified by the particular issue request (step S14).

The contents server 19 encrypts the program of which distribution is requested, by use of the UIM public key corresponding to the UIM 12. The program obtained by the encryption is considered a program with a certificate for a legitimate person authorized to access the UIM 12.

Then, the program encrypted by the UIM public key is further encrypted by the contents server 19 using the distribution management server public key received from the authentication server 18 in advance. The program obtained by this encryption can be considered a program having attached thereto both a certificate showing a legitimate person authorized to access the UIM 12 and a certificate showing a legitimate person authorized to distribute a program through the distribution management server 16.

### [1.4.5] Program distribution

The contents server 19 distributes the program obtained by the aforementioned two encryption sessions, to the distribution management server 16 through the network (step S 15).

The distribution management server 16 decrypts the encrypted program distributed from the contents server 19, using the distribution management server private key. Once this decryption succeeds, the program encrypted only by the UIM public key can be obtained. In this case, the contents server 19 can be considered a legitimate person authorized to distribute a program addressed to the UIM 12. The distribution management server 16 transmits the data on the screen D2 shown in Fig. 7 to the mobile terminal 11, and causes the data to be displayed on the display section 21. This screen D2 is for making an inquiry at the user as to whether the program can be distributed or not.

### [1.4.6] Writing in UIM

After the user confirms the screen D2 and performs the operation through the operating section 22 for permitting the program distribution, a notice to permit distribution is sent to the distribution management server 16. The distribution management server 16, upon receipt of the notice, distributes to the UIM 12 the program obtained by decryption, i.e. the program encrypted by the UIM public key (step S16).

This encrypted program is delivered as it is to the control unit 30 of the UIM 12 through the mobile terminal 11. Specifically, the mobile terminal 11 simply provides the UIM 12 with the communication function. This operation by the mobile terminal 11 guarantees the secure transmission to and the secure write operation into the UIM 12.

If the distribution management server 16 is to send a program to the UIM 12 in the aforementioned manner, it is necessary for the distribution management server 16 to establish a link with the UIM 12. This in turn requires the acquisition of the telephone number of the mobile terminal 11 with the UIM 12 connected thereto or built therein.

In one conceivable method to achieve this, at the time of issuing a distribution request from the mobile terminal 11 to the contents server 19, the telephone number of the mobile terminal 11 is caused to be transmitted to the contents server 19 which sends this telephone number to the distribution management server 16. In this way, the distribution management server 16 can access the mobile terminal 11 using the telephone number sent to it, and thus can distribute the program addressed to the UIM 12.

Another available method is described below. Specifically, in advance of issuing a distribution request from the mobile terminal 11 to the contents server 19, an identifier is determined between the mobile terminal 11 and the distribution management server 16 in place of the telephone number of the mobile terminal 11, so that the distribution management server 16 stores the telephone number and the identifier as information corresponding to each other. The mobile terminal 11 sends a distribution request containing the identifier to the contents server 19, which in turn attaches the identifier to a program when sending the program to the distribution management server 16. The distribution management server 16 determines the telephone number of the mobile terminal 11 from the identifier, and based on this telephone number, calls the mobile terminal 11 and distributes the program addressed to the UIM 12. This method has the advantage that the need is eliminated of notifying the telephone number of the mobile terminal 11 to the contents server 19.

The control unit 30 of the UIM 12, upon receipt of a program encrypted by the UIM public key in the manner described above, decrypts the program using a UIM private key paired with the particular UIM public key. Once this decryption ends in success, a program is obtained in the form of an ordinary text not encrypted. In this case, the contents server 19 making up the origin is considered a person duly authorized to distribute a program to the UIM 12. The UIM 12 writes the program obtained by decryption, in the appropriate one of the basic blocks 40-1 to 40-6 of the memory.

During this write operation, the screen D3 shown in Fig. 7 is displayed by the mobile terminal 11.

### [1.4.7] Write completion response

At the end of the program write operation, the control unit 30 of the UIM 12 transmits a write completion notice to the distribution management server 16 together with the information specifying the basic block having the particular program written therein (step S 17).

In the process, the screen D4 indicating that the write operation is complete (the registration is over) is displayed, as shown in Fig. 7, on the display section 21 of the mobile terminal 11. After that, the screen is again turned to D1 by the user operation.

### [1.4.8] Distribution completion notice

The distribution management server, upon receipt of a program write completion notice from the UIM 12, registers the information specifying the written program in a data base as information corresponding to the information indicating the basic block of the UIM 12 in which the particular program is written.

By accessing to the data base, the distribution management server 16 can easily grasp the program stored in each of all the basic blocks 40-1 to 40-6 of the UIM 12.

The distribution management server 16, upon distribution of a program into the UIM 12, starts the charge process against the contents provider of the contents server 19 from which the program is distributed. The timing of starting the charge process is not limited to this, but may be coincident with the timing of activation described later.

The contents provider are charged against the following items.

### (a) Rental charge for basic blocks in UIM 12

Upon distribution of a program from the contents server 19 to the UIM 12, the particular program is stored in one of the basic blocks 40-1 to 40-6 in the UIM 12. The particular basic block can be considered to be rented to the contents provider owning the contents server 19 for storing the program. Thus, a charge corresponding to the rental period, i.e. the period during which the program is stored in the basic block is made against the contents provider as a rental charge.

### (b) Transaction fee

The program transmitted from the contents server 19 is distributed to the UIM 12 through the process in the distribution management server 16. A consideration for the process performed by the distribution management server 16 is charged against the contents provider as a transaction fee.

The user of the UIM 12 receives the service in terms of the distribution of a program from the contents server 19, and therefore is required to pay the charge in consideration of the service. The distribution management server 16 may collect the service charge from the user on behalf of the contents provider together with the communication charge for the user, and delivers the collected service charge to the contents provider in the character of what might be called a "factor". In this case, the charge made against the contents provider may contain the factoring fee.

Upon complete program distribution, the distribution management server 16 notifies the contents server 19 (step S18).

### [1.4.9] Activation

The program distributed to the UIM 12 and stored in the basic block cannot be executed by the user before activation.

The user only receives the distribution but is not permitted to execute the program distributed to him, in order to enable the contents provider to control the program execution start time.

The activation is effectively utilized, for example, in the case where the time to start the use of a newly marketed game program is determined. By use of the activation, the release date (program distribution date) and the date to start to use (activation date) can be set separately from each other, thereby making it possible to reduce the load on the contents server 19.

Another example is a case in which the program for using the mobile terminal 11 as a commutation pass is distributed to the UIM 12. In this case, the activation is utilized to make the program executable from the first date of the term of validity of the commutation pass.

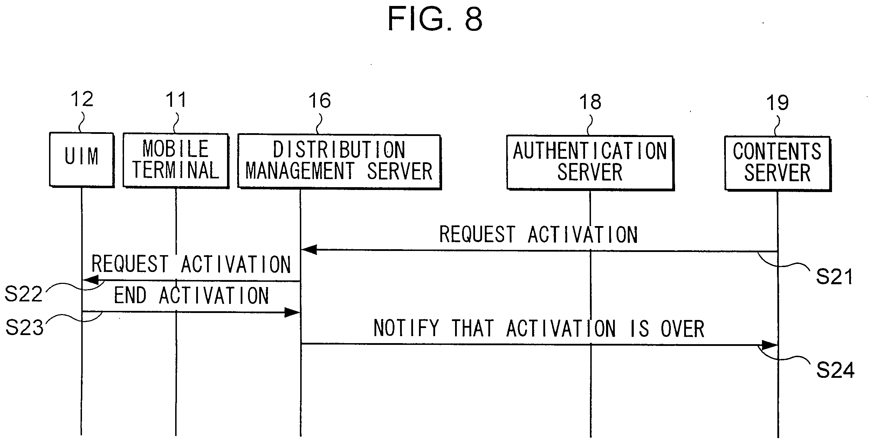

The operation for activation will be explained below with reference to Fig. 8.

### [1.4.9.1] Activation request to distribution management server

Whenever the activation becomes necessary for a given program, the contents server 19 sends an activation request to the distribution management server 16 (step S21). This activation request contains the information specifying a program to be activated. Also, in the case where only the program stored in the UIM 12 of a specific user is activated, the activation request contains the identifier (the telephone number of the mobile terminal 11 or an alternative identifier) of the particular user.

### [1.4.9.2] Activation request to UIM

The distribution management server 16, upon receipt of an activation request, issues an activation request to the UIM 12 of the mobile terminal 11 (step S22). As already described, the information specifying the written program is registered in the data base of the distribution management server 16 as information corresponding to the information indicating the basic block of the UIM 12 in which the program is written. The distribution management server 16, upon receipt of the activation request, refers to the particular data base and determines the UIM 12 to which the program to be activated is distributed and the basic block in which the program is written. In the case where the same program stored in a plurality of UIMs 12 is activated, as many activation processes as the UIMs 12 are performed. Each mobile terminal 11 in which the corresponding UIM 12 is mounted or built is accessed, and an activation request is sent to the UIM 12. The activation request sent to each mobile terminal 11 contains the information specifying the basic block having stored therein the program to be activated.

This activation request, when received by the mobile terminal 11, is directly sent to the UIM 12. The control unit 30 of the UIM 12 executes the activation in accordance with the activation request. Specifically, the UIM 12 sets the activation flag from "0" to "1" for the basic block specified by the activation request. The control unit 30 of the UIM 12 responds to a request, if any, to execute the program stored in the basic block with the activation flag turned "1". A request, if any, to execute the program in the basic block with the activation flag "0", however, is rejected.

### [1.4.9.3] Activation end response

The UIM 12, upon complete program activation, transmits an activation end notice to the distribution management server 16 (step S23). This notice contains the information specifying the program of which the activation is ended, or more specifically, the information specifying the basic block storing the particular program.

### [1.4.9.4] Activation completion notice

The distribution management server 16, upon receipt of the activation completion notice from the UIM 12, determines the basic block of the UIM 12 in which the completely activated program is stored. The information to the effect that the activation is completed is registered in the storage area in the data base prepared for the particular basic block.

As the result of this registration, the distribution management server 16 can grasp, by accessing the data base, whether each program in the basic blocks 40-1 to 40-6 is activated or not for all the UIMs 12.

Upon registration of activation completion for all the UIMs to which the program of which the activation is requested are distributed, the distribution management server 16 notifies the contents server 19 that the program activation is complete (step S24). This notice contains the information specifying the program that has been activated.

### [1.4.10] Deactivation

The program distributed to the UIM 12 and activated may require deactivation. This requirement occurs, for example, in a case where a program for the mobile terminal 11 to function as a credit card is stored in the UIM 12, and the user has lost the particular UIM 12. In such a case, the deactivation is started in response to the request from the user informed of the loss. Other examples include a case in which the user that has received a service has failed to pay the service charge before the due date. In such a case, at the request of the contents provider providing such a service, the deactivation of the program for receiving the particular service can be started.

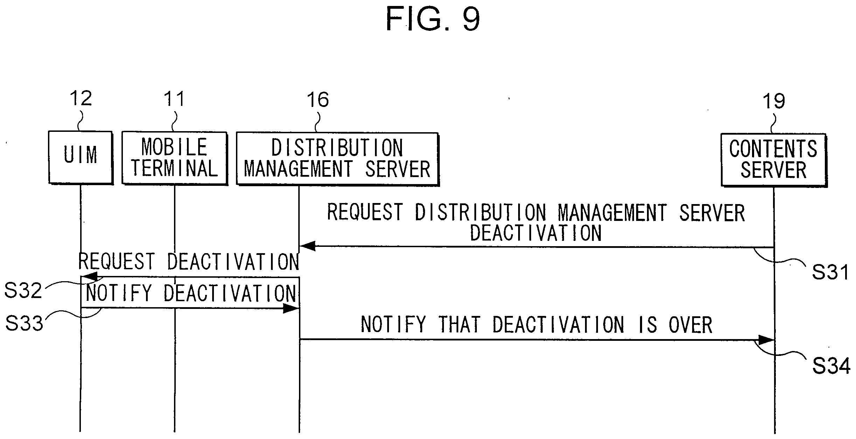

The deactivation process will be explained below with reference to Fig. 9.

### [1.4.10.1] Deactivation request to distribution management server

The contents server 19, whenever required to deactivate a program distributed to a UIM 12, sends a deactivation request to the distribution management server 16 specifying the particular UIM 12 and the program to be deactivated (step S31).

### [1.4.10.2] Deactivation request to UIM

The distribution management server 16, upon receipt of this deactivation request, accesses the data base and determines that basic block in the UIM 12 specified by the deactivation request which stores the program to be deactivated. Then, the distribution management server 16 sends a deactivation request to the mobile terminal 11 in which the particular UIM 12 is mounted or built (step S32). This deactivation request contains the information specifying the basic block storing the program to be deactivated.

The deactivation request is sent to the UIM 12 through the mobile terminal 11. The activation flag prepared for the basic block specified by the deactivation request is reset from "1" to "0" by the UIM 12. After that, the execution of the program in this particular basic block is prohibited.

### [1.4.10.3] Deactivation end response

The UIM 12, upon termination of the program deactivation, notifies the distribution management server 16 (step S33). This notice contains the information specifying the program which has been deactivated, or specifically, the information specifying the basic block storing the program.

### [1.4.10.4] Deactivation completion notice

The distribution management server 16, upon receipt of a program deactivation end notice from the UIM 12, determines, based on the notice, the basic block of the UIM 12 storing the program of which the deactivation has been completed. The information to the effect that the deactivation is complete is registered in the storage area of the data base prepared for the particular basic block.

Upon registration of completion of the deactivation, the distribution management server 16 notifies the contents server 19 of the completion of the deactivation (step S34).

### [1.4.11] Deletion (only when desired by user)

A deactivated program wastefully occupies a memory area in the UIM 12. It is desirable for both the user and the contents provider to delete such an unnecessary program. The deletion of the program, however, cannot be left to the user. If the user arbitrarily deletes the program in the UIM 12, the rent charging process for the UIM would continue to proceed in spite of the program deletion, unless the fact of deletion is notified to the distribution management server 16 immediately.

According to this embodiment, therefore, whenever the user desires to delete a program, the program is deleted under the control of the distribution management server 16.

A deletion, based on a reason on the side of the contents provider, is basically not permitted due to the resulting complication of the charging process.

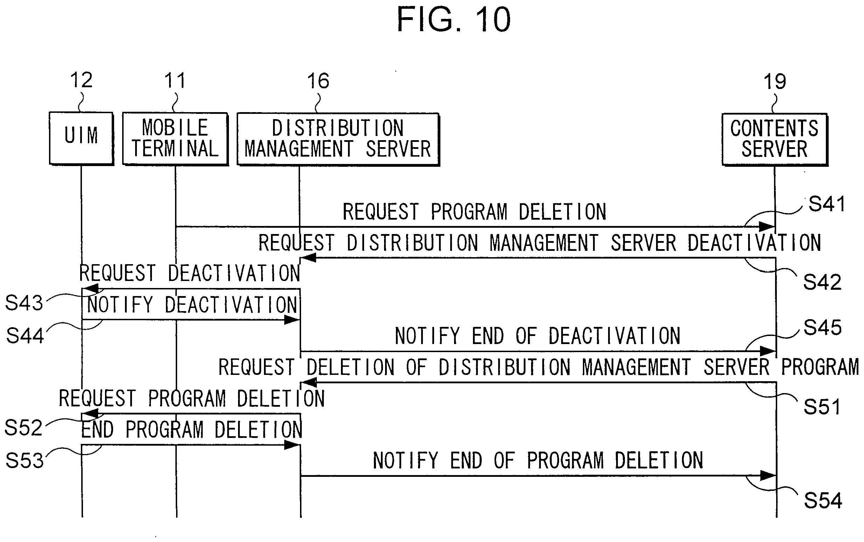

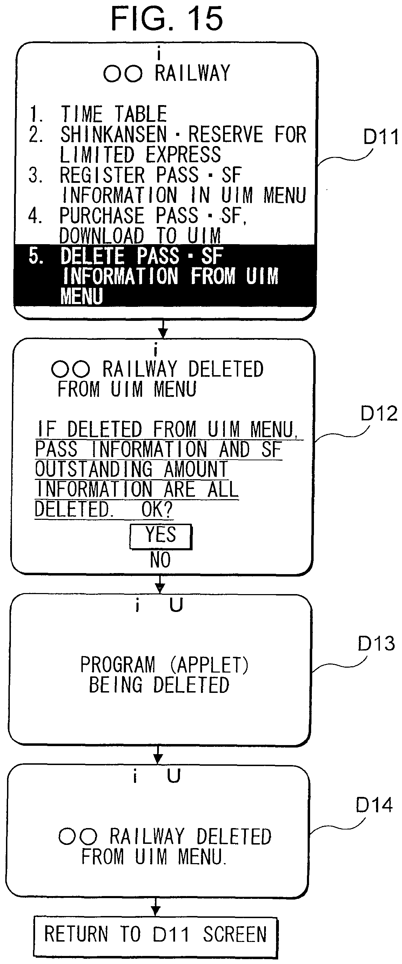

The operation of deleting a program in response to the desire of the user will be explained below with reference to Figs. 10 and 15.

### [1.4.11.1] Program deletion request

The user accesses a predetermined home page of the contents provider by operating the operating section 22 of the mobile terminal 11. A distribution menu screen D11 shown in Fig. 15 is displayed on the display screen of the display section 21 of the mobile terminal 11. This distribution menu screen D11 is provided by the contents server 19 of the contents provider distributing the program. When the user selects a menu item meaning the deletion of a program, a screen D12 asking the user whether the deletion can be carried out is displayed on the display section 21 of the mobile terminal 11, as shown in Fig. 15.

The user performs the operation permitting the deletion. The mobile terminal 11 transmits a program (applet) deletion request to the contents server 19 through the network (step S41). This request contains the information specifying the program to be deleted.

With the transmission of a program deletion request, a screen D13 indicating that the deletion is going on, is displayed as shown in Fig. 15 on the display section 21 of the mobile terminal 11.

### [1.4.11.2] Deactivation request to distribution management server

The contents server 19, upon receipt of a program deletion request, sends a deactivation request to the distribution management server 16 (step S42). This deactivation request contains the information specifying the mobile terminal 11 of the user requesting the program deletion and the information specifying the program to be deleted.

### [1.4.11.3] Deactivation request to UIM

The distribution management server 16, upon receipt of a deactivation request, accesses the database and determines a basic block storing the program to be deleted. Then, the distribution management server 16 sends a deactivation request containing the information specifying the particular basic block to the mobile terminal 11 of the user requesting the program deletion (step S43).

This deactivation request is sent to the UIM 12 through the mobile terminal 11. The UIM 12resets, from "1" to "0" the activation flag prepared for the basic block specified by the deactivation request. After that, the execution of the program in the particular basic block is prohibited.

### [1.4.11.4] Deactivation end response

The UIM 12, at the end of the program deactivation, transmits a deactivation end notice to the distribution management server 16 (step S44). This notice contains the information specifying the basic block storing the program deactivated.

### [1.4.11.5] Deactivation end notice

The distribution management server 16, upon receipt of the program deactivation end notice from the UIM 12, registers the information to the effect that the deactivation is complete, in the area of the data base corresponding to the basic block of the UIM 12 specified by the deactivation end notice.

The distribution management server 16 sends a program deactivation end notice to the contents server 19 (step S45).

### [1.4.11.6] Deletion request to distribution management server

The contents server 19, upon receipt of the deactivation end notice for the program to be deleted, from the distribution management server 16, requests the distribution management server 16 to delete the particular program (step S51).

### [1.4.11.7] Deletion request to UIM

The distribution management server 16, upon receipt of the program deletion request, sends a program deletion request to the UIM 12 of the user who requests the program deletion (step S52). This program deletion request contains the information specifying the basic block storing the program to be deleted.

The program deletion request is sent to the UIM 12 through the mobile terminal 11. The UIM 12 deletes the program in the basic block specified by the program deletion request.

### [1.4.11.8] Deletion end response

The UIM 12, at the end of the program deletion, transmits a deletion end notice indicating the program deletion to the distribution management server 16 (step S53). This deletion end notice contains the information specifying the basic block from which the program is deleted and the program deleted. At the same time, a screen D14 indicating the end of deletion is displayed, as shown in Fig. 15, on the display section 21 of the mobile terminal 11.

### [1.4.11.9] Deletion completion notice

The distribution management server 16, upon receipt of the deletion end notice from the UIM 12, registers the information to the effect that the program has been deleted in the storage area in the data base corresponding to the combination of the user requesting the deletion and the program deleted.

Then, the distribution management server 16 sends to the contents server the notice that the program deletion is complete (step S54).

In the case where the charge process against the contents provider has been made for the program deleted, the distribution management server ceases to charge the contents provider thereafter.

### [1.4.12] Deletion (only when desired by distribution management server)

According to this embodiment, a program may be deleted by other than the intention of the user. An example is the expiry of a predetermined term during which a program can be used.

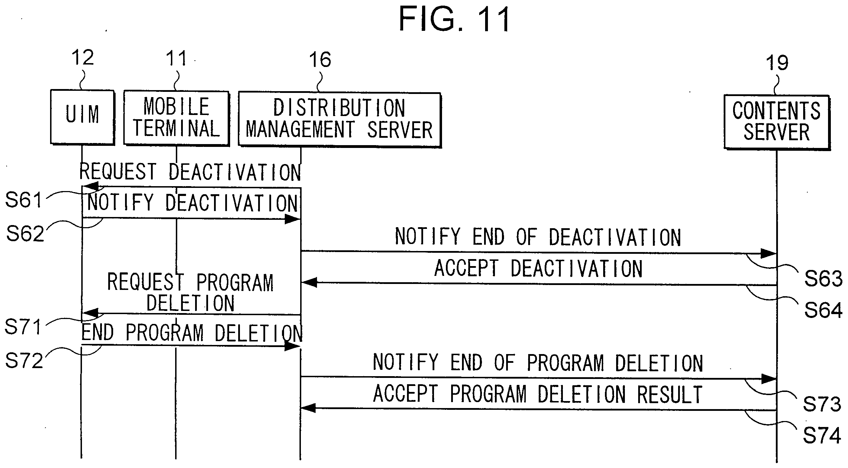

The operation for deleting a program under the guidance of the distribution management server in such a case will be described below with reference to Fig. 11.

### [1.4.12.1] Deactivation request to UIM

If the usable term of a program has expired and the program is required to be deleted, the distribution management server 16, by accessing the data base, determines all the UIMs 12 to which the program to be deleted has been distributed and the basic blocks storing the program to be deleted in each of the UIMs 12, and sends a deactivation request to each of the UIMs 12 (step S61). Each deactivation request contains the information specifying the basic block storing the program to be deleted.

The deactivation request is sent to each UIM 12 through the mobile terminal 11. The UIM 12 resets, from "1" to "0", the activation flag corresponding to the basic block specified by the deactivation request. After that, the execution of the program in the particular basic block is prohibited.

### [1.4.12.2] Deactivation end response

At the end of the deactivation, the UIM 12 transmits a deactivation end notice to the distribution management server 16 (step S62).

### [1.4.12.3] Deactivation completion notice

The distribution management server 16, upon receipt of the deactivation end notice from the party to which the program to be deleted has been distributed, registers the information indicating the completion of the deactivation in the storage area of the data base formed for the particular program.

The distribution management server 16 sends a program deactivation completion notice to the contents server 19 (step S63).

### [1.4.12.4] Notification of deactivation completion notice receipt to distribution management server

The contents server 16, upon receipt of the deactivation completion notice from the distribution management server 16, sends a deactivation receipt notice to the distribution management server 16 (step S64).

### [1.4.12.5] Deletion request to UIM

The distribution management server 16, upon receipt of the deactivation receipt notice, sends a program deletion request to the mobile terminal 11 that has transmitted the deactivation completion notice corresponding to the deactivation receipt notice (step S71). The deletion request sent to the mobile terminal 11 contains the information specifying the basic block storing the program to be deleted.

The UIM 12, upon receipt of the deletion request through the mobile terminal 11, deletes the program in the basic block specified by the request.

### [1.4.12.6] Deletion end response

The UIM 12, at the end of the program deletion, transmits a deletion end notice to the distribution management server 16 (step S72). This notice contains the information specifying the basic block from which the program has been deleted.

### [1.4.12.7] Deletion completion notice

The distribution management server 16, upon receipt of the deletion end notice from all the parties to which the program to be deleted has been distributed, registers the information to the effect that the program has been deleted, in the storage area of the data base formed for the particular program to be deleted.

The distribution management server 16 sends a deletion completion notice to the contents server 19 (step S73).

At the same time, the distribution management server ceases the charging process which may have hitherto been made against the contents provider for the deleted program.

### [1.4.12.8] Deletion result receipt notice to distribution management server

The contents server 19, upon receipt of the deletion completion notice from the distribution management server 16, sends a deletion result receipt notice to the distribution management server 16 (step S74).

### [1.4.13] Program distribution process for UIM version management

The contents server 19 may be required to distribute a program voluntarily regardless of the desire on the part of the user. An upgrade of the program that has been distributed is a case in point.

In such a case, the distribution of the program of a new version to the UIMs 12 of all the users to which the particular program has been distributed gives rise to an inconvenience. This is by reason of the fact that the mobile terminals 11 are of various models, and the UIM specifications have various versions. It may happen, therefore, that a program of a new version, if sent to all the UIMs, can be executed normally only by the UIMs having a version issued at a certain time point or thereafter.

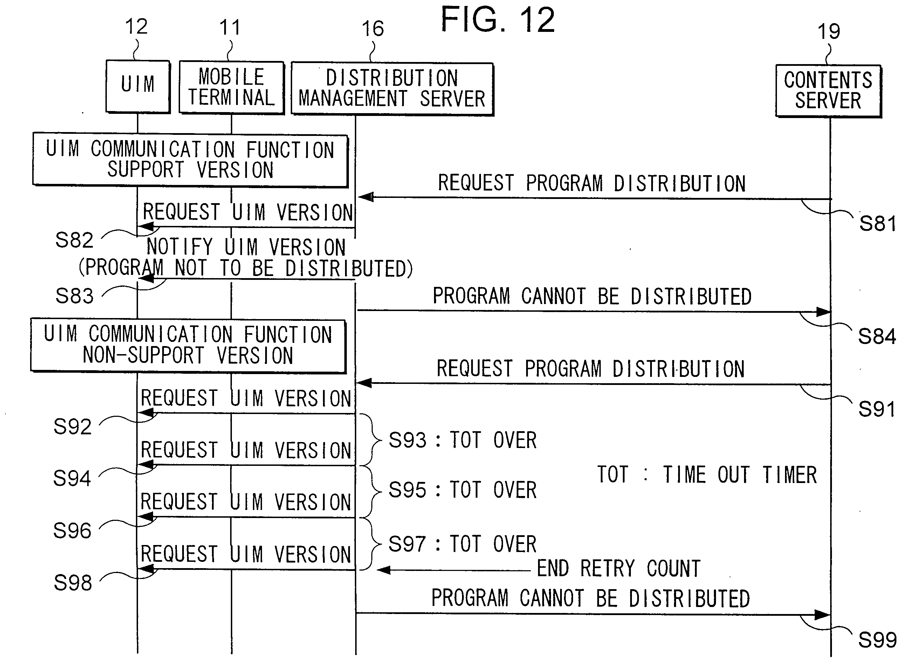

According to this embodiment, at each time of an upgrade of a program, a version notice request is sent to the UIMs and based on the response to the request, it is determined whether the program is to be distributed or not to a given UIM. This operation is shown in Fig. 12. Some of the UIMs 12 support the function of notifying the version thereof in response to the version notice request, and others do not. Fig. 12 shows the operation performed in the case where a version notice request has been sent to a UIM supporting such a function and the operation performed in the case where a version notice request has been sent to a UIM not supporting the function.

### [1.4.13.1] Operation for UIM supporting version notice function

### [1.4.13.1.1] Program distribution request to distribution management server

Prior to distribution of a program after upgrade, the contents server 19 sends to the distribution management server 16 a program distribution request containing the information specifying the program and the version information indicating the version of the UIM 12 that can execute the particular program (step S81).

### [1.4.13.1.2] Version notice request to UIM

The distribution management server 16, upon receipt of the program distribution request, accesses the data base, determines all the mobile terminals 11 to which the program specified by the program distribution request has been distributed, and sends a version notice request to the mobile terminals 11 thus determined (step S82).

### [1.4.13.1.3] Version notice

The version notice request is sent to each UIM 12 through the mobile terminal 11. The UIM 12, upon receipt of the version notice request, notifies the version thereof to the distribution management server 16 (step S83).

### [1.4.13.1.4] No program distribution notice

The distribution management server 16 receives a version notice from each UIM 12. In the case where the version notice received from a given UIM 12 fails to meet the conditions indicated by the version information from the contents server 19, the contents server 19 is notified that the program cannot be distributed to the particular UIM 12 (step S84).

In the case where the version notice received from another given UIM 12 meets the conditions indicated by the version information from the contents server 19, on the other hand, the distribution management server 16 distributes the program to the particular UIM 12. This operation is described above with reference to Figs. 6 and 8.

### [1.4.13.2] Operation for UIM not supporting version notice function

### [1.4.13.2.1] Program distribution request to distribution management server

The contents server 19 sends a program distribution request to the distribution management server 16 in the same manner as described above (step S91).

### [1.4.13.2.2] Version notice request to UIM

The distribution management server 16 sends a version notice request to the UIM 12 of the mobile terminal 11 (step S92).

### [1.4.13.2.3] Timer count

In this case, the UIM 12 does not support the version notice function, and therefore makes no response.

Thus, the distribution management server 16 monitors the timer, and upon expiry of a predetermined time-out period (step S93), sends a version notice request again to the UIM 12 of the mobile terminal 11 (step S94). Then, the value on the retry counter is incremented by one.

In a similar fashion, the distribution management server 16 monitors the timer, and upon expiry of a predetermined time-out period (step S95), sends a version notice request again to the UIM 12 of the mobile terminal 11 (step S96). Then, the value of the retry counter is incremented by one.

### [1.4.13.2.4] No program distribution notice

Once again, the distribution management server 16 monitors the timer, and upon expiry of a predetermined time-out period (step S97), sends a version notice request again to the UIM 12 of the mobile terminal 11 (step S98). Then, the value on the retry counter is incremented by one.

In the case where the figure on the retry counter reaches a predetermined value (3 in this case), the distribution management server 16 determines that the version of the UIM 12 fails to meet the conditions for the version notified from the contents server 19, and sends a no-program distribution notice to the contents server 19 (step S84).

As a result, the contents server 19 confirms that the program of which distribution is desired, cannot be distributed.

### [1.4.14] Program distribution process based on UIM memory capacity limitation

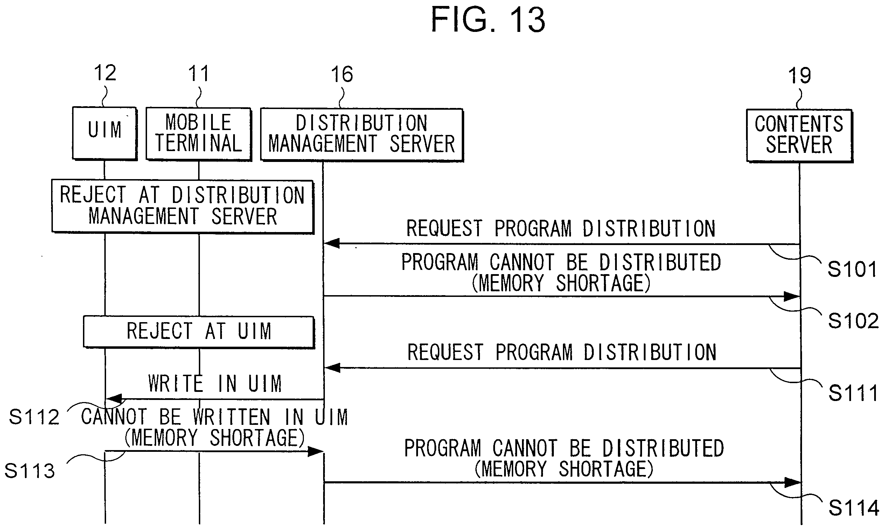

The limitation of the memory capacity of the UIM 12 may make the program distribution impossible, even if desired by the contents server 19. An example of the operation performed in such a case is shown in Fig. 13. This operation will be explained below.

### [1.4.14.1] Rejection by distribution management server

The contents server 19 requests the distribution management server 16, by attaching the program to be distributed, to send a program distribution request to the UIM 12 (step S101).

The information indicating the memory state of each UIM is registered in the database of the distribution management server 16. The distribution management server 16, upon receipt of the program distribution request to a given UIM 12, accesses the data base, and determines whether the basic block for the particular UIM 12 is available for storage, or if available, is too small in capacity to store the program (the capacity may vary from one version to another of UIM) or whether there is any other stumbling block to the program distribution.

In the case where the program cannot be distributed, the distribution management server 16 sends a notice to the contents server 19 that the program cannot be distributed due to the shortage of the memory capacity (step S102).

As a result, the contents server 19 confirms that the program for which distribution is desired, cannot be distributed.

### [1.4.14.2] Rejection by UIM

The memory capacity and the current occupancy state of each UIM 12 are registered in the database of the distribution management server 16. For some reason or other, however, the actual UIM memory state may differ from the memory state registered in the database of the distribution management server 16. The operation performed in such a case is described below.

First, the contents server 19 sends a program distribution request together with a program to the distribution management server 16 (step S111).

The distribution management server 16 accesses the data base and determines whether the basic block of the destination UIM 12 is available for storage and has a sufficient capacity.

In the case where the determination is YES, the distribution management server 16 sends a write request together with the program to the UIM 12 (step S112).

The UIM 12 that has received the write request determines whether the program attached to the write request can be stored in any one of the basic blocks or not. In the case where the determination is NO, the UIM 12 sends a no-program distribution notice to the distribution management server 16 due to lack of memory capacity (step S 113).

The distribution management server 16, upon receipt of the no-program distribution notice due to lack of memory capacity, sends it to the contents server 19 (step S 114).

From this notice, the contents server 19 can confirm that the program cannot be distributed to the UIM to which the distribution is desired.

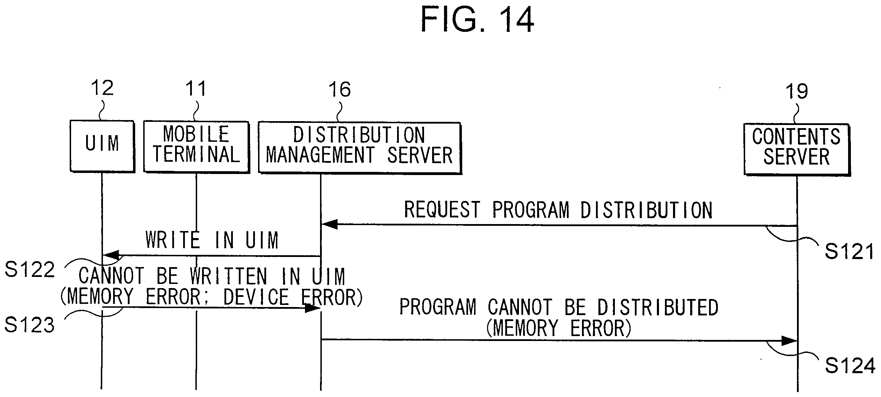

It may also happen that a program cannot be stored in a basic block due to a write error in the memory of the UIM 12 or the malfunction of the memory device. In such a case, exactly the same operation as described above is performed. Fig. 14 shows such an operation. In Fig. 14, steps S121 to S124 correspond to steps S111 to S 114 in Fig. 13 and represent exactly the same operation, respectively.

### [1.4.15] Specific example of operation

Now, a specific example of the operation according to this embodiment will be explained.

### [1.4.15.1] Execution of program stored in UIM

In this example of an operation, assume that a program called " ○ ○ RAILWAY" is stored in the basic block 40-1 of the UIM 12.

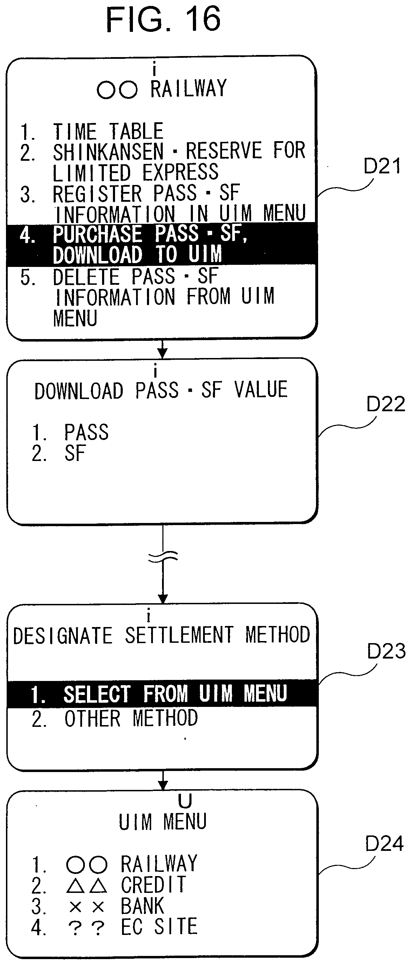

The user operates the operating section 22 of the mobile terminal 11 and thus accesses the home page of the contents provider that has distributed the " ○○ RAILWAY" program. A distribution menu screen D21 as shown in Fig. 16 is displayed on the display screen of the display section 21. This distribution menu screen D21 is provided by the contents server 19 of the contents provider. The user performs the operation for selecting an item concerning the purchase of a commutation pass from the menu displayed on the distribution menu screen D21. A purchase request for the commutation pass is transmitted from the mobile terminal 11 to the contents server 19 through the network.

As a result, a download screen D22 is sent from the contents server 19 to the mobile terminal 11 and displayed on the display section 21. The download screen D22 contains a menu of several value data having the same monetary value as the commutation pass.

Once the user selects the desired value data, the information requesting the selected value data is sent to the contents server 19 from the mobile terminal 11.

After that, the contents server 19 sends to the mobile terminal 11 the screen data for selecting a method of account settlement. As a result, a screen D23 is displayed by the mobile terminal 11. The user selects "SELECT FROM UIM MENU" from the menu items in the screen D23, and thus can settle the account by use of the program in the UIM 12. Specifically, once this select operation is performed, the UIM 12 is notified of the fact. Upon receipt of this notice, the control unit of the UIM 12 returns to the mobile terminal 11 the list of the programs stored in the basic blocks 40-1 to 40-6. The screen D24 containing this list is displayed on the display section 21 of the mobile terminal 11. The user selects a settlement program from the list. The selected program is executed by the UIM 12 thereby to settle the account.

Assume that the account is settled by executing the program in the program area 41 of the basic block 40-2. The data area 42 of the same basic block 40-2 is used for settling the account.

The contents server 19, upon detection that the account has been settled, sends the value data of the commutation pass included in the commutation pass purchase request described above, to the mobile terminal 11. This value data contains the information such as the names of the two stations involved, the validity term, the name of the user and the age of the user and are sent from the mobile terminal 11 to the UIM 12. The value data, which are to be used for the " ○○ RAILWAY" program, are stored in the data area 42 of the basic block 40-1 corresponding to the same data in the UIM 12.

### [1.4.15.2] Mail order sale using network

In this example of an operation, a program for a mail order sale is stored in the basic block 40-2 of the UIM 12.

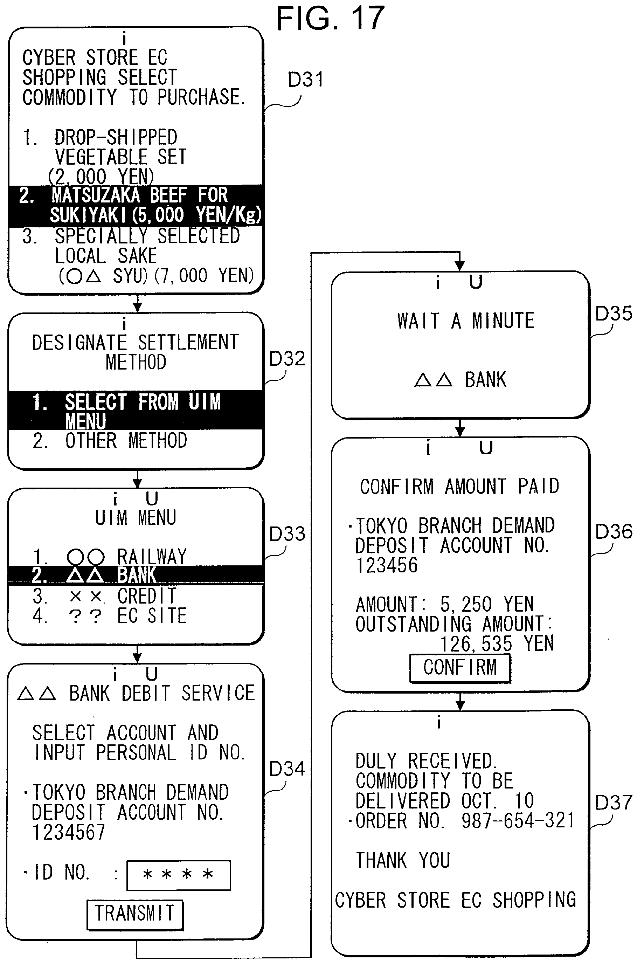

The user accesses the home page of the contents provider by operating the operating section 22 of the mobile terminal 11, so that a distribution menu screen D31 shown in Fig. 17 is displayed on the display section 21 of the mobile terminal 11. This distribution menu screen D31 is provided by the contents server 19 of the contents provider which in turn provides the mail order sale (what is called "e-commerce") service utilizing the network. The user selects the desired commodity (MATSUZAKA BEEF FOR SUKIYAKI, Y5000/KG, in Fig. 17) from the commodities listed in the distribution menu screen D31. Then, a purchase request is transmitted from the mobile terminal 11 to the contents server 19 through the network.

The contents server 19 that has received the purchase request returns a settlement method screen D32 to the mobile terminal 11. As a result, a select screen D32 is displayed on the display section 21.

From the settlement methods listed in the select screen D32, the user is assumed to have selected "XX BANK". The settlement program for XX Bank stored in the basic block 40-3 of the UIM 12 is started by the control unit 30 of the UIM 12 and a settlement screen D34 is displayed.

The user inputs the personal identification (ID) number as settlement information. The mobile terminal 11 tries to connect the settlement server for XX Bank through a communication unit 34 and the network, so that the screen D35 being accessed is displayed.

Upon complete authentication, a purchase amount confirmation screen D36 is displayed.

The user confirms the amount to be paid and inputs the confirmation. The mobile terminal 11 displays a payment confirmation screen D37 of the contents provider, i.e. the mail order house, together with the delivery date, etc.

### [1.4.15.3] Use of commutation pass (check gate passage, manual start)

According to this embodiment, the mobile terminal 11 can be used as a commutation pass by storing an appropriate program in the UIM 12. An example of operation will be explained below.

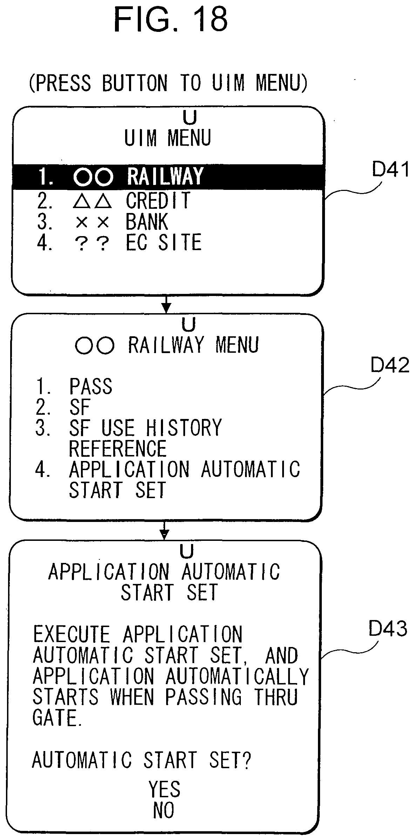

First, the user depresses a button 23. A UIM menu screen D41 shown in Fig. 18 is displayed on the display section 21. The user selects " ○○ RAILWAY" for which the commutation pass is used. As a result, the control unit 30 of the UIM 12 executes the ○○ RAILWAY program in the basic block 40-1, so that a menu screen D42 is displayed on the display section 21.

When the screen D42 is displayed, the user selects "4. SET APPLICATION AUTO. START". An automatic start set confirm screen D43 is displayed thereby prompting the user to select.

In the case where the user selects "YES", the automatic start is set. In the case where the user selection is "NO", on the other hand, the automatic start is not set.

The gate of the railway company is equipped with a ticket check reader/writer. Before passing through the gate, the user performs the following operation.

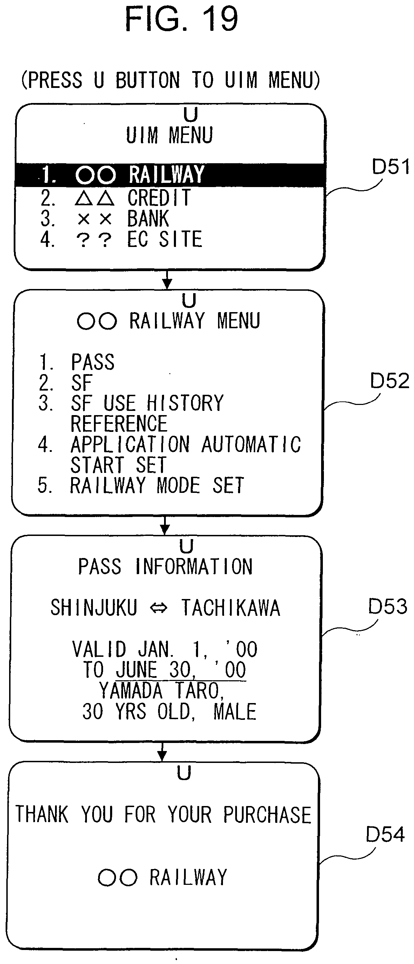

First, the user depresses the U button 23. The UIM menu screen D41 shown in Fig. 19 is displayed on the display section 21. The user then selects " ○○ RAILWAY" for which the pass is used. As a result, the control unit 30 of the UIM 12 executes the ○○ RAILWAY program in the basic block 40-1, and displays the menu screen D42 on the display section 21. The user selects "1. PASS". The pass program constituting a part of the ○○ RAILWAY program is started by the control unit 30. In accordance with this pass program, the control unit 30 begins communication with the ticket reader/writer for pass check. In the case where this communication is carried out by the common key cryptosystem, for example, the pass check process is performed following the steps described below.
(1) Each party checks the other party.
(2) The ticket check reader/writer requests the mobile terminal 11 to transmit information on the commutation pass.
(3) The mobile terminal 11 encrypts the pass information by the common key and transmits it to the ticket check reader/writer. The pass information display screen D53 is displayed on the display section of the mobile terminal 11.
(4) The ticket check reader/writer decrypts the received commutation pass information, and, in the case where the user is found to be legitimate, the gate is opened to allow him in.

At the same time, a message screen D54 for expressing gratitude to the user is displayed on the display section 21.

The foregoing description deals with the commutation pass. In the case where the mobile terminal 11 is used to function as a private card, however, the data area 42 is updated to indicate the value data corresponding to the amount after subtracting the actual charge in the process of (4) above.

### [1.4.15.4] Use of commutation pass (gate passage: auto. start)

When the screen D43 shown in Fig. 18 is displayed, the user can select "YES" and the automatic start is set. The following operation is performed. Specifically, when the mobile terminal 11 set to the automatic start mode approaches the gate of the station, a polling signal transmitted from the ticket check reader/writer is received by the mobile terminal 11. As a result, the pass program constituting a part of the ○○ RAILWAY program is automatically started by the control unit 30 in the UIM 12, and the pass check similar to the manual start is carried out.

### [1.5] Effect of first embodiment

As described above, according to this embodiment, even in the case where the storage area of the storage module is divided to store each program, the mobile terminal simply provides the communication function to the UIM, and no extra burden is imposed on the mobile terminal. Therefore, the inherent function of the mobile terminal is not adversely affected

Also, the program storage, the activation, the deactivation and the deletion are not carried out by the mobile terminal, but under the control of the distribution management server. Thus, the user convenience is improved while at the same time maintaining security.

### [2] Second embodiment

According to the first embodiment described above, the program executed by the UIM 12 is stored in the basic blocks 40-1 to 40-6 in the same UIM. In the second embodiment, however, all the programs executed are not necessarily stored in the basic blocks.

### [2.1] Configuration of second embodiment

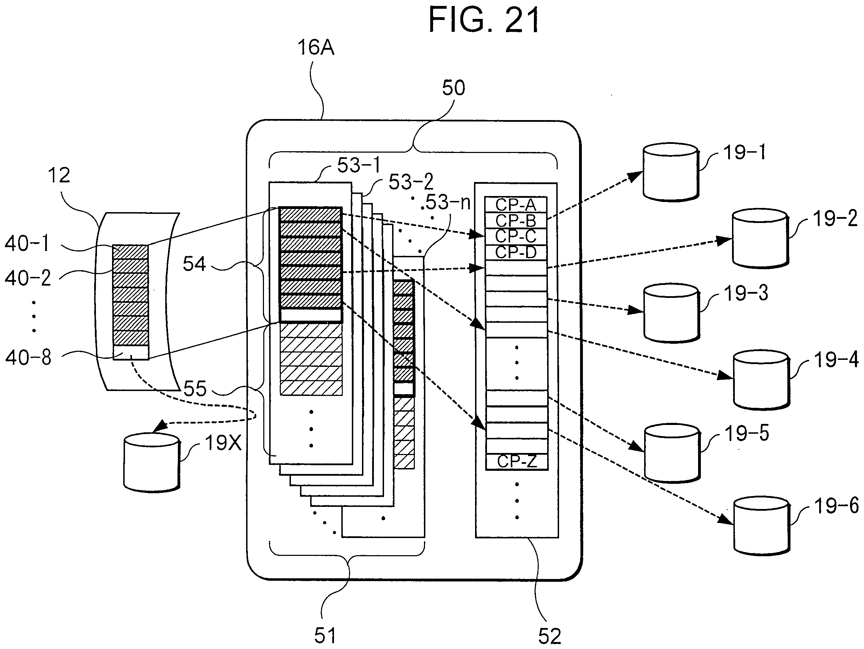

Fig. 21 is a block diagram showing a configuration of a program distribution system according to a second embodiment of the invention.

A UIM 12, contents servers 19-1 to 19-6 and 19X and a distribution management server 16A are shown in Fig. 21. The distribution management server 16A corresponds to the distribution management server 16 of the first embodiment plus the functions unique to this embodiment. The contents servers 19-1 to 19-6 and 19X have similar functions to the contents server 19 of the first embodiment. The system according to this embodiment has an authentication server, as in the first embodiment, not shown in Fig. 21.

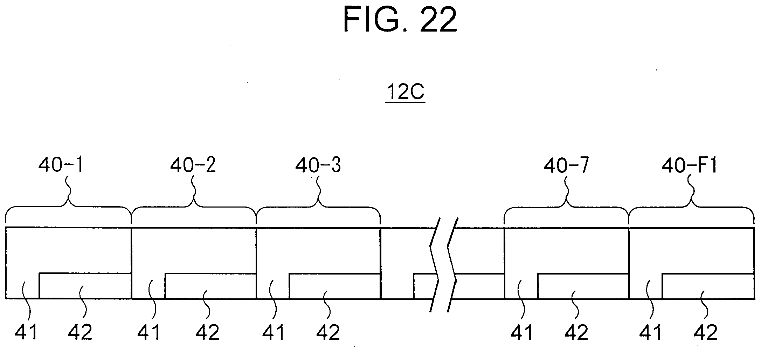

The UIM 12 according to this embodiment includes an application area 12C shown in Fig. 22 in place of the application area 12B of the first embodiment. The program storage area 12C is divided into seven basic blocks 40-1 to 40-7 and one free basic block 40-1.

The basic blocks 40-1 to 40-7 and the free basic block 40-F1 each have a program area 41 and a data area 42. A program (application or applet) is stored in the program area 41. The data area 42, on the other hand, has stored therein the data used by the program stored in the program area 41 of the same basic block or the free basic block.

In this case, the basic blocks 40-1 to 40-7 and the free basic block 40-F1 are independent of each other, and basically, the program stored in the program area 41 of a given block cannot access the data area 42 of other blocks. This is also the case with the first embodiment. The program stored in the program area 41 cannot be distributed or deleted without intermediary of the distribution management server 16A. The data area 42, however, can be directly operated through the distribution management server 16A or a local terminal as in the case where electronic money is downloaded from the ATM. This point is also similar to the first embodiment.

According to this embodiment, the distribution of the programs stored in the basic blocks 40-1 to 40-7 is controlled by the distribution management server 16A. The program stored in the free basic block 40-F1, however, is controlled not by the distribution management server 16A but on the user's own responsibility.

According to the first embodiment, the program transmitted from the contents server 19, in accordance with the distribution request from the mobile terminal 11, is sent to the UIM 12 by the distribution management server 16. The distribution management server 16A according to this embodiment, on the other hand, accepts the program distribution request from the mobile terminal 11, and on acquiring the program by accessing the contents server as required, distributes it to the UIM 12 of the mobile terminal 11. The distribution management server 16A according to this embodiment is similar to the distribution management server 16 of the first embodiment in that the program distribution from the contents server to the UIM 12 is relayed and managed. This operation, however, is not the only function of the distribution management server 16A according to this embodiment. Specifically, the distribution management server 16A has means for storing a program or the information indicating the location of the program for the benefit of the user of the UIM 12, and any of the programs stored in this means can be acquired by the user through the distribution management server 16A. In this sense, the distribution management server 16A exhibits a function similar to a cache memory for the UIM 12.

In order to manage the program distribution to the UIM 12 and exhibit the function like a cache memory, the distribution management server 16A includes a distribution management unit 50. The distribution management unit 50 has a user information storage unit 51 and a program information storage unit 52.

The program information storage unit 52 has stored therein a program proper or a URL corresponding to the program that can be distributed to the UIM 12. The URL is the information indicating the address of a specific one of the contents servers 19-1 to 19-6 and the very contents server where a particular program is located. Which is to be stored in the program information storage unit 52 for a given program, the URL information or the program proper, can be determined based on the storage capacity of the program information storage unit 52, or in the case where the storage capacity is sufficient, can be selected as desired by the contents provider operating the distribution server.

The chance of storing a new program or the URL thereof in the program information storage unit 52 is given, for example, in the case where the mobile terminal 11 of a given user sends a program distribution request, and a program or the URL thereof meeting the particular distribution request is not stored in the program information storage unit 52. In such a case, the program information storage unit 52 accesses the contents server and acquires and stores the program desired by the user, in compliance with the request from the mobile terminal 11.

The user information storage unit 51 includes n (n > 1) individual user information storage units 53-1 to 53-n corresponding to n persons to which the system, according to the invention, is applicable. Each individual user information storage unit 53-k has a real distribution information storage unit 54 and a virtual distribution information storage unit 55.

The real distribution information storage unit 54 of the individual user information storage unit 53-k has stored therein pointer data corresponding to the program actually distributed to the UIM 12 of the user k. The pointer data is for indicating a particular area in the program information storage unit 52 where the program or the URL thereof is stored. The availability of the real distribution information storage unit 54 makes it possible for the distribution management server 16A to immediately redistribute any program, if erased, in the basic blocks 40-1 to 40-7 of the UIM 12.

The virtual distribution information storage unit 55 of the individual user information storage unit 53-k, on the other hand, stores the pointer data corresponding to an available program, though not actually distributed to the UIM 12 of the user k, that can be immediately distributed to the UIM 12 of the user k who is desirous of having such a program. The user of the UIM 12 can receive the following services by use of the virtual distribution information storage unit 55.
(a) The pointer data of a program of which distribution to the UIM 12 is desired is provisionally stored in the virtual distribution information storage unit 55. The user, whenever the distribution of the program with the pointer data thereof stored in the virtual distribution information storage unit 55 is required, sends a request to the distribution management server 16A using the mobile terminal 11. The distribution management server 16A reads the pointer data of the requested program from the virtual distribution information storage unit 55, and acquires and distributes the program specified by the particular pointer data to the UIM 12. In this case, the pointer data of the program distributed to the UIM 12 is moved from the virtual distribution information storage unit 55 to the real distribution information storage unit 54.
(b) The number of the basic blocks in the UIM 12 is limited. Therefore, it may happen that all the basic blocks are occupied and no basic block is available for storing the program to be distributed. In such a case, the distribution management server 16A reads the pointer data from the storage area corresponding to a given basic block 40-X in the UIM 12, from among the storage areas in the real distribution information storage unit 54, and transfers it to the virtual distribution information storage unit 55. The program to be distributed is sent to the UIM 12, where it is written in the basic block 40-X, and the pointer data of the program is written in the storage area corresponding to the basic block 40-X in the real distribution information storage unit 54. This process makes it possible to acquire a program by a distribution request and store it in a basic block even in the case where the basic blocks are fully occupied. In the process, with regard to the program driven away from the basic block, a request may be given again, if required, to the distribution management server 16A and the process described in (a) above can be carried out.

Now, an explanation will be given of the function of the distribution management server 16A corresponding to the free basic block 40-F1. As already described, as for the free basic block 40-F1, the distribution management server 16 does not manage the program distribution. The user, by operating the mobile terminal 11, can freely register or delete a program in the free basic block 40-F1.

The real distribution information storage unit 54 of the individual user information storage unit 53 has a storage area corresponding to the basic block 40-F1 of the UIM 12. In this area, however, no pointer data of a program is stored, but the data including the number of times a program is registered in or deleted from the basic block 40-F1 or the URL information thereof. In the case where nothing is stored in the free basic block 40-F1, the data indicating the fact ("Null" data, etc.) may be stored in this area.

The program in the free basic block 40-F1 of the UIM 12, should it be deleted, unlike the programs stored in the basic blocks 40-1 to 40-7, remains as it is until registered again by the user himself.

In the case where the user is desirous of changing the program in the free basic block 40-F1 temporarily to another program, on the other hand, such a change can be made always by the user himself rewriting it.

In such a case, the distribution management server 16A cannot carry out the charging process even if a program is stored in the free basic block 40-F1.

The free basic block 40-F1 can be changed so that it can be handled the same way as the basic blocks 40-1 to 40-7 as desired by the user. Specifically, before the change, seven basic blocks 40-1 to 40-7 and one free basic block 40-F1 can be used as eight basic blocks 40-1 to 40-8.

In such a case, the information to the effect that the free basic block 40-F1 has been changed to the basic block 40-8 is written by the distribution management server 16A in the system area 12A (Fig. 4) of the UIM 12. Also, the area in the real distribution information storage unit 54 that has hitherto been handled as an area corresponding to the free basic block 40-F1 can be handled by the distribution management server 16A as an area corresponding to the basic block 40-8, and using this area, the same management as that of the basic blocks 40-1 to 40-7 is started.

The basic block that has been changed to the basic block 40-8 by the user in this way can be restored to the free basic block 40-F1 again. The basic blocks 40-1 to 40-7 cannot be changed to free basic blocks.

### [2.2] Configuration of distribution management server

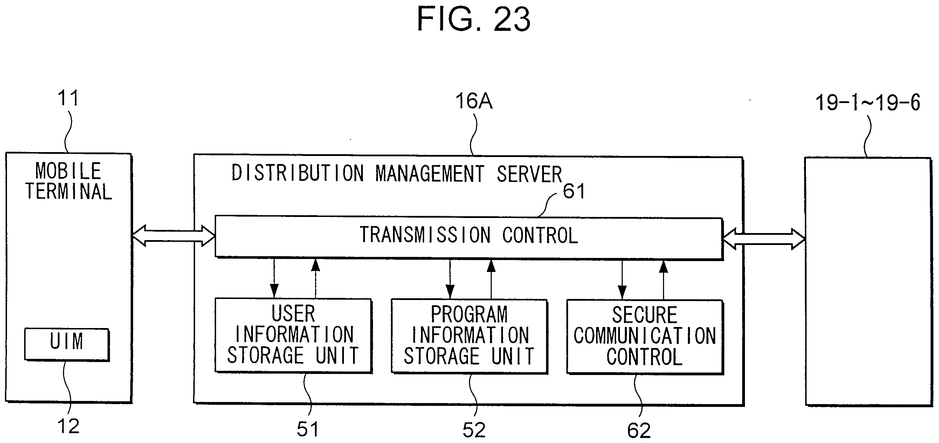

A configuration of the distribution management server is shown in Fig. 23.

The distribution management server 16A is roughly configured of a transmission control unit 61, the user information storage unit 51 described above, the program information storage unit 52 described above and a secure communication control unit 62.

The transmission control unit 61 controls the transmission between the external contents servers 19-1 to 19-6 or between the mobile terminals 11 (including the transmission between the contents servers 19-1 to 19-6 and the mobile terminals 11). The transmission control unit 61 also controls the transmission between the user information storage unit 51, the program information storage unit 52 and the secure communication control unit 63 to each other. Further, the transmission control unit 61 controls the distribution management unit 50, the user information storage unit 51, the program information storage unit 52 and the secure communication control unit 63 on the one hand, and requests the execution of various processes in the distribution management unit 50, the user information storage unit 51, the program information storage unit 52 and the secure communication control unit 63 on the other hand.

The program information storage unit 52 substantially functions as a portal site for the program permitted to be distributed to the basic blocks 40-1 to 40-7 of the UIM 12.

The secure communication control unit 63 authenticates the information (an encrypted program, etc.) sent from the contents servers 19-1 to 19-6, holds the public key paired with the private key held by each UIM, and manages the issue of the public keys for the contents servers 19-1 to 19-6.

### [2.3] Operation of second embodiment

### [2.3.1] Registration in user information storage unit

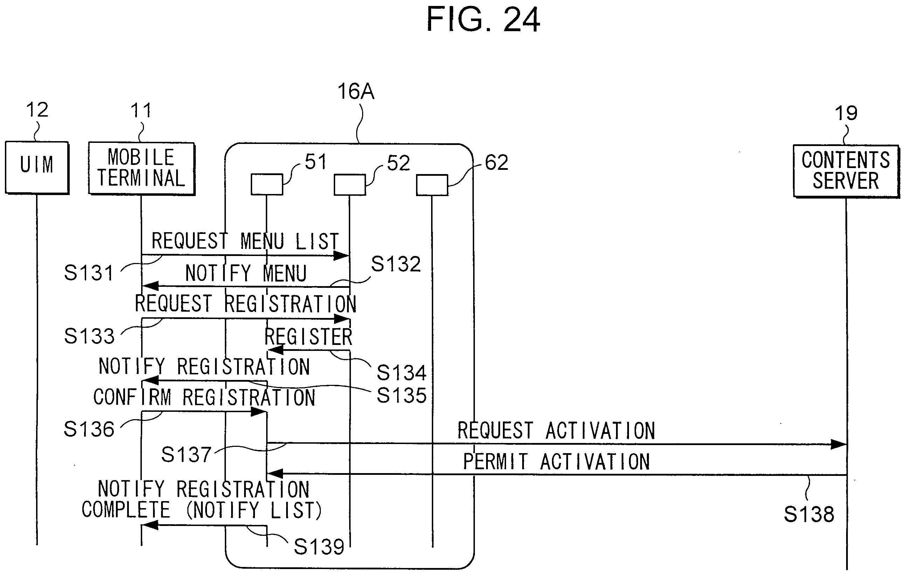

In the example shown in Fig. 21, the contents servers 19-1 to 19-6 are under the control of the distribution management server 16A. The user desirous of using a program (applet) stored in any of the contents servers is required to register the particular program in the user information storage unit 51 of the distribution management server 16A. The registration process will be explained below with reference to Fig. 24.

First, the user sends a request for a menu list of the programs that can be registered, to the distribution management server 16A from the mobile terminal 11. This request is sent to the program information storage unit 52 through the transmission control unit 61 of the distribution management server 16A (step S131).

The program information storage unit 52 that has received the request prepares a menu list of all the programs that can be registered or, specifically, all the programs of which the program proper or the URL is stored in the program information storage unit 52, and transmits the menu list through the transmission control unit 61 to the mobile terminal 11 (step S132).

This menu list is received by the mobile terminal 11 and displayed on the display section 21. Under this condition, the user can acquire, by operating the operating section 22, a comment on the desired program from the distribution management server 16A and display it on the display section 21.

Once the program of which distribution is requested is determined by the user operating the operating section 22, the mobile terminal 11 transmits a registration request containing the information specifying the particular program to the program information storage unit 52 of the distribution management server 16A (step S133).

The program information storage unit 52, based on the program registration request, registers the program requested by the user in the user information storage unit 51 (step S134).

The operation in step S 134 will be described in detail. First, assume that the registration request is issued from the mobile unit 11 in which the UIM 12 of a given user k is built or mounted. In this case, the program information storage unit 52, based on the registration request, identifies the program requested by the user, and determines the pointer data for specifying the internal area of the program information storage unit 52 in which the URL information indicating the location of the program or the program proper thereof is stored. Once the pointer data of the program requested by the user is obtained in this way, the program information storage unit 52 accesses the contents stored in each area of the real distribution information storage unit 54 of the individual user information storage unit 53-k corresponding to the user k, and thus determines the basic block 40-X (1 ≦ X ≦ 7) available for storage among the basic blocks of the UIM 12 of the user k. The pointer data of the program requested by the user is registered in the area of the real distribution information storage unit 54 corresponding to the basic block 40-X (step S134). It may be that the UIM 12 of the user k has no basic block 40-X (1 ≦ X ≦ 7) available for storage. In such a case, the program information storage unit 52 registers the pointer data in the virtual distribution information storage unit 55 designated by the user or set automatically.

In step S141, the menu list may not have any desired program. In such a case, the user can request the program information storage unit 54, by operating the mobile terminal 11, to access to the desired contents server. In this case, the program information storage unit 54, in compliance with the user request, acquires the program or the URL thereof from the contents server desired by the user, and holds it in the unoccupied area in the program information storage unit 54. In the process, the pointer data indicating the location of the acquired program or the URL thereof is registered in the real distribution information storage unit 54 in the same manner as the procedure mentioned above.

Upon complete registration of the program requested by the user in this way, the distribution management server 16A starts the charge process for the user or the contents provider that has distributed the particular program.

Then, the user information storage unit 51 sends a registration notice to the mobile terminal 11 through the transmission control unit 61 (step S135).

The mobile terminal 11, upon receipt of the registration notice, sends a registration acknowledgment to the distribution management server 16A (step S136).

The user information storage unit 51, upon receipt of the registration acknowledgment through the transmission control unit 61 from the mobile terminal 11 having the UIM 12 of the user k built therein or connected therewith, determines the contents provider 19 storing the program of which the pointer data has been registered for the user k, and sends an activation permission request to the contents server 19 (step S137).

The contents server 19 that has received the activation permission request, in order to approve a program utilization contract, sends the activation permission to the user information storage unit 51 (step S138). As a result, the user information storage unit 51 considers that the use is permitted of the pointer data stored in that area of the real distribution information storage unit 54 of the individual user information storage area 53-k for the user k which corresponds to the basic block 40-X.

The user information storage unit 51 sends a registration completion notice indicating that the registration in the mobile terminal 11 is completed (step S139). This registration completion notice contains a registration list providing a list of the programs with the pointer data thereof registered in the user information storage unit 51.

The user can confirm the registration list from the display section 21 of the mobile terminal 11.

### [2.3.1.1] Registration of UIM in basic block (the contents server holding the program)

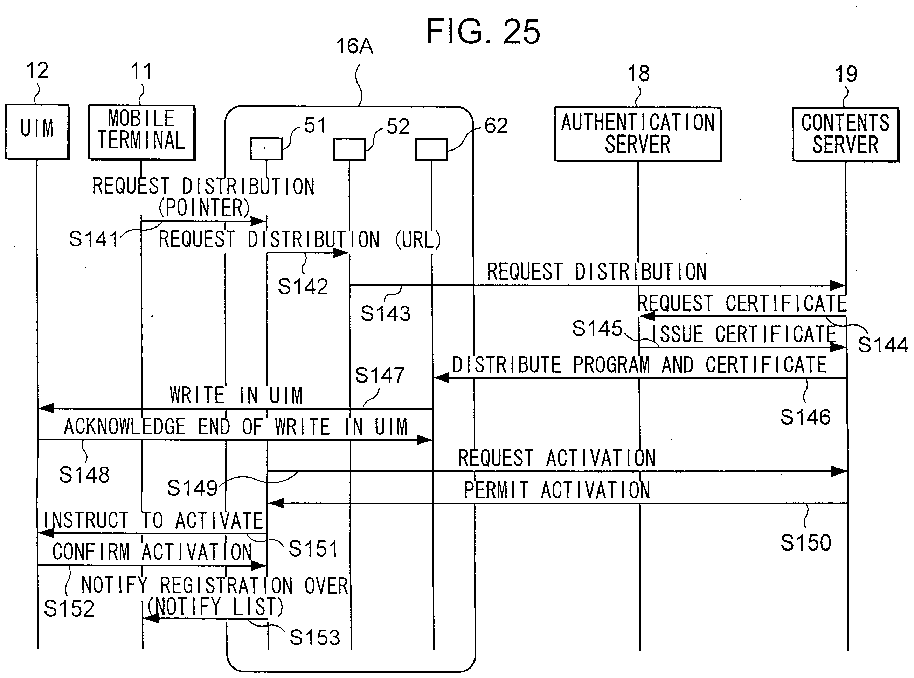

The user k who has received the registration list can request the program for which he has requested registration, to be distributed and written in the UIM 12. With reference to Fig. 25, this operation will be explained.

The user k performs the operation for selecting a program of which distribution is desired from the registration list. Then, a distribution request containing the pointer in the registration list, indicating the position number in the registration list where the particular program is located, is sent to the user information storage unit 51 of the distribution management server 16A from the distribution terminal 11 (step S141).

The user information storage unit 51, upon receipt of a distribution request from the mobile terminal 11 of the user k, reads the pointer data specifying the place of storing the program proper or the URL of the program requiring distribution, from that area of the real distribution information storage unit 54 of the individual user information storage unit 53-k which corresponds to the pointer in the registration list contained in the particular distribution request. The distribution request containing the pointer data is sent to the program information storage unit 52 (step S142).

The program information storage unit 52 accesses the area specified by the pointer data in the particular distribution request. In the case where the URL of the program is stored in the area, the program distribution is requested from the contents server 19 using the URL (step S 143).

The contents server 19, upon receipt of this distribution request, requests the authentication server 18 to issue a public key for the distribution management server (step S 144).

In the case where the contents server 18 is permitted to write in the UIM 12, the authentication server 18 issues the public key for the distribution management server to the contents server 19 (step S 145).

The contents server 19 encrypts the program using the public key for the distribution management server, and distributes it as a program, with a certificate, to the secure communication control unit 62 of the distribution management server 16A (step S 146).

The secure communication control unit 62 has stored therein a distribution management server private key paired with the distribution management server public key, and using this private key, decrypts the program with a certificate. In the case where this decryption is successful, a program written in a common text is obtained.

The secure communication control unit 62 acquires the UIM public key corresponding to the destination UIM 12 from the authentication server (refer to the first embodiment), and encrypting the program by the UIM public key, sends it to the UIM 12. In the UIM 12, the program is decrypted using the UIM private key paired with the UIM public key. Once the decryption is successful, a program in a common text is obtained. The UIM 12 writes this program in the basic block 40-X (step S 147). The UIM 12 determines the basic block 40-X by the same algorithm as used by the program information storage unit 52 in the distribution management server 16A. In step S147, therefore, the same basic block 40-X is obtained as determined in step S134 of Fig. 24. Alternatively, the registration completion notice transmitted from the distribution management server 16A in step S139 of Fig. 24 may contain the information specifying the unoccupied basic block 40-X determined in step S 134, and in step S 147 of Fig. 25, the program is stored in the basic block 40-X specified by the particular information.

The UIM 12, at the end of the program write operation, transmits a write end notice to the secure communication control unit 62 of the distribution management server 16 (step S148). This write end notice contains the information for specifying the basic block 40-X in which the program is written.

When the secure communication control unit 62 of the distribution management server 16 receives the write end notice, the user information storage unit 51 sends an activation request to the contents server 19 in order to request the permission for execution of the program written in the UIM 12 (step S149).

The contents server 19 that has received this activation request sends an activation permission to the user information storage unit 51 (step S150).

The user information storage unit 51 that has received the activation permission sends an activation instruction to the UIM 12 (step S151).

In the UIM 12, upon receipt of the activation instruction, the activation flag corresponding to the basic block 40-X in which the program is written turns from "0" to "1", after which the execution of the program in the particular basic block becomes possible.

The UIM 12, at the end of the program activation, transmits an activation acknowledgment notice indicating the end of the program activation to the user information storage unit 51 of the distribution management server 16A, together with the information specifying the program (for example, the information specifying the basic block 40-X) (step S152).

The user information storage unit 51, upon receipt of the activation acknowledgment notice from the UIM 12 of the user k, determines an area of the real distribution information storage unit 54 of the individual user information storage unit 53-k corresponding to the basic block 40-X. In this area, the pointer data corresponding to the program written in the basic block 40-X is already written in the UIM 12 of the user k. In this area, the information to the effect that the activation is complete is written in such a form that a given pointer coexists. As the result of this operation, the distribution management server 16A can grasp whether the activation has been performed for the basic blocks 40-1 to 40-7 of all the UIMs 12 by accessing each area of the user information storage unit 51.

The user information storage unit 51, at the end of the operation for writing the information to the effect that the activation is complete, notifies the mobile terminal 11 that the registration is complete as a program list, and subsequently, notifies that the program can be executed, while at the same time ending the process (step S153).

The distribution management server 16A notifies the contents server 19 that the activation of the program is completed (step S 154).

### [2.3.1.2] Registration of in UIM basic block (in the case where the distribution management server holds the program proper)

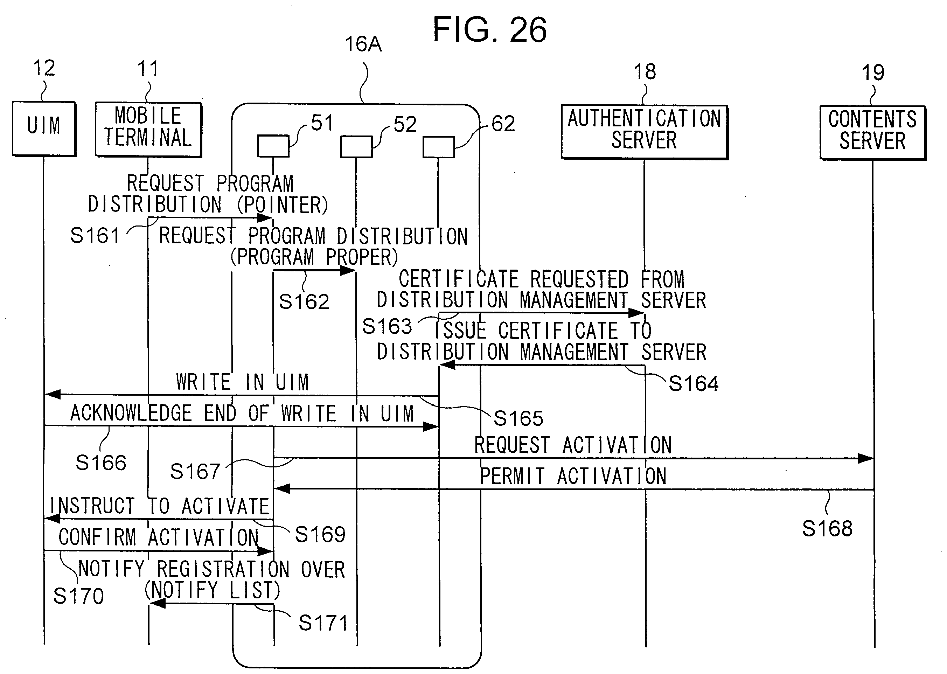

In the example of operation shown in Fig. 25, the program proper, of which the distribution is desired by the user, is not stored in the distribution management server 16A but in the contents server 19. In the operation example shown in Fig. 26, in contrast, the program proper of which the distribution is desired by the user is stored in the distribution management server 16A. The operation example shown in Fig. 26 will be explained below.

The user accesses the registration list received from the distribution management server 16A, and performs the operation for selecting the desired program. A distribution request containing the pointer in the registration list corresponding to the particular program is sent from the mobile terminal 11 to the user information storage unit 51 of the distribution management server 16A (step S161).

The user information storage unit 51, upon receipt of the distribution request from the mobile terminal 11 of the user k, reads the pointer data for specifying the place of storage of the URL of the program or the program proper of which the distribution is requested, from that area of the real distribution information storage unit 54 of the individual user information storage unit 53-k which corresponds to the pointer in the registration list contained in the distribution request. The distribution request containing this pointer data is sent to the program information storage unit 52 (step S162).

The program information storage unit 52 accesses the area designated by the pointer data in the distribution request. In the case where the program proper is stored in the particular area, the secure communication control unit 62 requests the authentication server 18 to issue a certificate, i.e. sends a request for the UIM public key required for encrypting the program proper and sending it to the UIM 12 of the user k (step S163).

In the case where the program corresponding to the distribution request is a program permitted to write in the UIM 12, the authentication server 18 sends the UIM public key to the secure communication control unit 62 (step S164).

The secure communication control unit 62 receives this UIM public key, and upon determination that the key is legitimate, encrypts the program to be distributed, using the UIM public key, and thus generates a program with certificate.

When the user performs the operation at the mobile terminal 11 to permits the program distribution, the secure communication control unit 62 of the distribution management server 16A sends a program with certificate to the UIM 12 of the mobile terminal 11 (step S165).

The UIM 12 has stored therein a UIM private key paired with the UIM public key, and using this UIM private key, decrypts the program. The same program is written in the basic block 40-X.

The subsequent operation is similar to the corresponding operation shown in Fig. 25. In Fig. 26, steps S166 to S171 correspond to steps S148 to S153 in Fig. 25.

### [2.3.1.3] Registration in UIM basic block (In the case where the distribution management server holds the program proper, and the secure communication control unit holds the UIM public key)

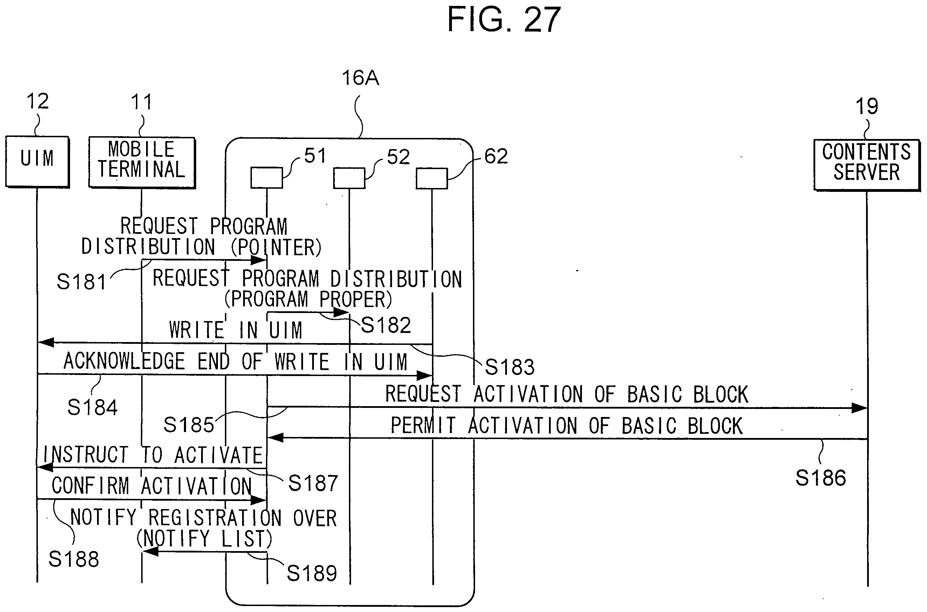

It may happen that when the mobile terminal 11 sends a distribution request to the distribution management server 16A, the secure communication control unit 62 of the distribution management server 16A holds the UIM public key of the UIM 12 to which the program is to be distributed. Such a phenomenon may occur, for example, in the case where programs are distributed to the same UIM 12 within a short time. Fig. 27 shows an example of the operation performed in such a case. In this operation example, when a program proper corresponding to the distribution request is found, the program is encrypted using the UIM public key held in the secure communication control unit 62 and written in the UIM 12. The operation shown in Fig. 27 is similar to the operation shown in Fig. 26, except that the operation corresponding to steps S163 and S164 for acquiring the UIM public key from the authentication server 18 is lacking. Steps S181, S182, S183 to S189 in Fig. 27 correspond to steps S161, S162, S165 to S171, respectively, in Fig. 26.

### [2.3.1.4] Registration in UIM free basic block

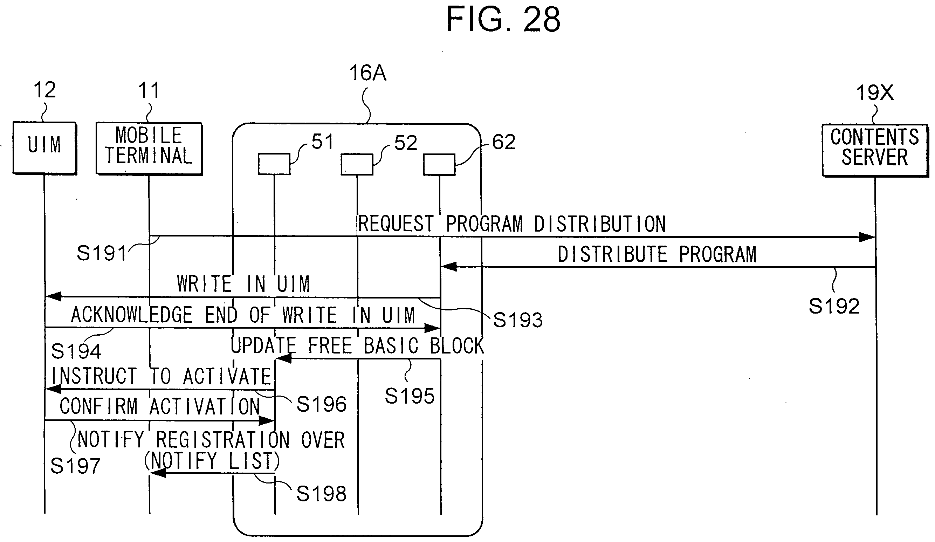

The user, by operating the mobile terminal 11, can register a program in the free basic block 40-F1 of the UIM 12. This operation is shown in Fig. 28.

In the case where a program is registered in the free basic block 40-F1 of the UIM 12, the user operates the mobile terminal 11 so that the desired contents server 19X is accessed and a request for distributing the desired program is sent to it (step S191).

The contents server 19X that has received this distribution request distributes the requested program to the secure communication control unit 62 of the distribution management server 16A (step S 192).

The user performs the operation to permit the distribution to the free basic block 40-F1, and the information indicating the particular operation is sent from the mobile terminal 11 to the distribution management server 16A. Then, the secure communication control unit 62 distributes the program to the UIM 12 of the mobile terminal 11 (step S193). This program may be sent in encrypted form or without encryption. The UIM. 12 writes this program in the free basic block 40-F1.

The UIM 12, at the end of the program write operation, transmits a write end notice to the distribution management server 16 (step S184).

The user information storage unit 51 of the distribution management server 16 receives the write end notice from the UIM 12 of the user k, and updates the information including the number of distribution sessions stored in the area of the user individual information storage unit 53-k corresponding to the free basic block 40-F1 (step S 195).

Once this update operation is completed, the user information storage unit 51 sends to the UIM 12 an activation instruction for the program written in the free basic block 40-F1 (step S196).

The UIM 12, in compliance with this instruction, completes the program activation, and transmits to the user information storage unit 51 of the distribution management server 16 an activation response notice indicating that the activation of the program in the free basic block 40-F1 is completed (step S197).

The user information storage unit 51, upon receipt of the activation response notice from the UIM 12 of the user k, registers the information that the activation is complete, in the area of the individual user information storage unit 53-k corresponding to the free basic block 40-F1. The user information storage unit 51 notifies, in the form of program list, the mobile terminal 11 that the registration is complete, thereby terminating the process (step S198).

### [2.3.1.5] Program deletion from user information storage unit

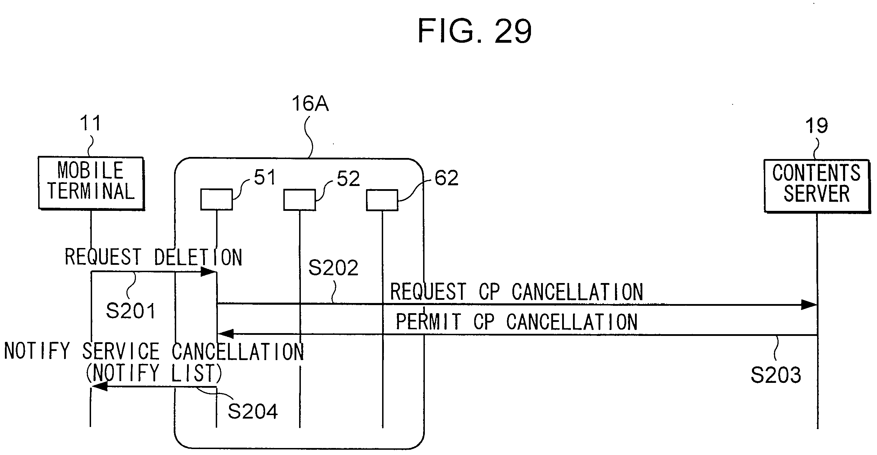

Now, the process for deleting the program registered in the user information storage unit 51 will be explained with reference to Fig. 29.

The user, by performing a predetermined operation, can display the registration program list received from the distribution management server 16A, on the display unit 21. Under this condition, the user specifies the desired program and instructs to delete the program in the distribution management server 16A. A program registration delete request containing the information for specifying what is to be deleted is sent to the user information storage unit 51 of the distribution management server 16A (step S201).

In the case where the program to be deleted is already deleted from any one of the basic blocks 40-1 to 40-7 of the UIM 12, the user information storage unit 51 sends a cancel request indicating the desire of the user to cancel the utilization of the program, to the contents server 19 from which the particular program is distributed (step S202). In the case where a program to be deleted remains undeleted in any one of the basic blocks 40-1 to 40-7 of the UIM 12, on the other hand, the process for deletion of the program from the basic blocks 40-1 to 40-7, described later, is carried out at the same time under the guidance of the distribution management server 16A.

The contents server 19, upon receipt of the cancel request, sends a cancel permission notice to the user information storage unit 51 of the distribution management server 16A (step S203).

The user information storage unit 51, upon receipt of the cancel permission notice, deletes the information on the program of which the deletion is requested in step S201, and sends the registered program list after deletion to the mobile terminal 11 (step S204).

### [2.3.16] Program deletion from UIM basic block

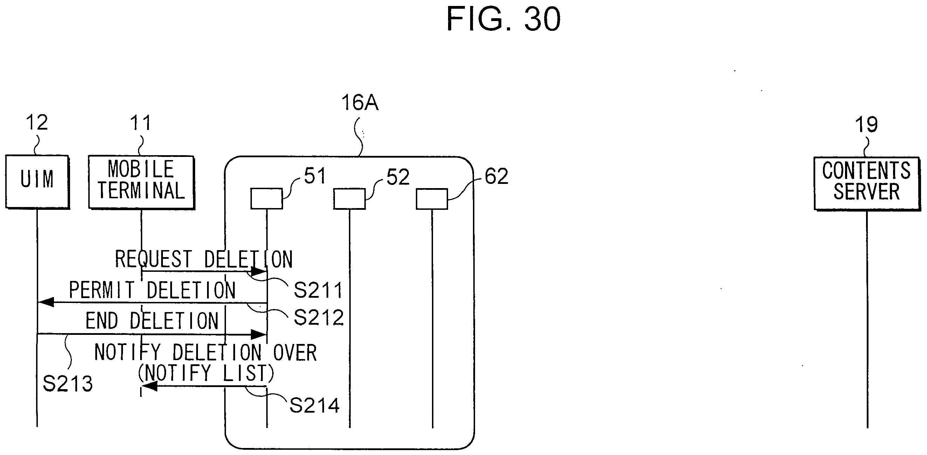

Now, the process for deleting a program from the basic blocks 40-1 to 40-7 of the UIM 12 will be explained with reference to Fig. 30.

The user, by performing a predetermined operation, can display on the display unit 21 the registered program list transmitted already to the mobile terminal 11. Under this condition, assume that the user specifies the desired program and gives an instruction to delete it. One of the basic blocks 40-1 to 40-7 of the UIM 12 where the program to be deleted is stored is determined, and a deletion request containing the information specifying the particular basic block is transmitted from the mobile terminal 11 to the user information storage unit 51 of the distribution management server 16A (step S211).

The user information storage unit 51, upon receipt of the deletion request, sends a deletion permission notice to the UIM 12 (step S212).

The UIM 12, upon receipt of the deletion permission notice, deletes the program specified by the user in step S211 from the basic block, and sends a deletion end notice to the user information storage unit 51 (step S213).

As a result, the user information storage unit 51 deletes the information on the corresponding program under the control of the transmission control unit 61, and gives a deletion notice to the contents server 19 (step S214).

Also, the user information storage unit 51 notifies the mobile terminal 11 that the deletion is complete in the form of a program list, thereby ending the process.

### [2.3.1.6.1] The case in which the program deletion from basic block is carried out at the same time under the guidance of distribution management server.

As described above, if the process for deleting a program from the basic blocks 40-1 to 40-7 is carried out at the same time as the deletion of the program from the user information storage unit 5 under the guidance of the distribution management server, the user information storage unit 51 of the distribution management server sends a deletion instruction to the UIM by specifying the program of which deletion is requested, in place of the process of steps S211 and S212 described above.

### [2.3.1.7] The case in which use of user information storage unit is prohibited.

According to this embodiment, a deactivation process for the user information storage unit can be executed for preventing the user from using the user information storage unit 51. This deactivation process for the user information storage unit is carried out, for example, in the case where the distribution management server 16A stops the service temporarily, or the service of the distribution management server 16A to the user is temporarily suspended at the request of the contents provider holding the contents server 19. Once this deactivation process for the user information storage unit is carried out, the distribution of the programs registered in the user information storage unit 51 to the UIM 12 is prohibited and so is the deletion of the programs registered in the UIM 12.

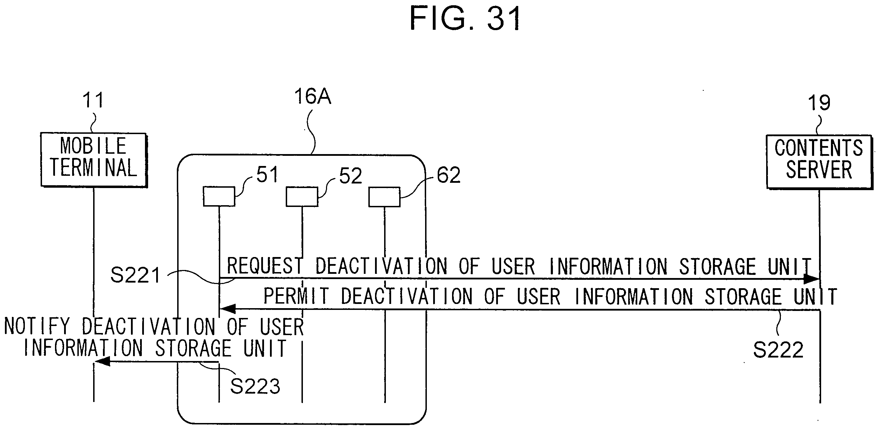

Now, with reference to Fig. 31, the deactivation process for the user information storage unit will be explained. The following description concerns the case in which the contents server 19 requests the deactivation process for the user information storage unit.

First, the contents server 19 sends a user information storage unit deactivation request to the user information storage unit 51 of the distribution management server 16A (step S221).

The user information storage unit 51, upon receipt of the user information storage unit deactivation request, is prohibited from use (deactivated state), and sends a user information storage unit deactivation permission notice to the contents server 19 (step S222).

Then, the user information storage unit 51 sends to the mobile terminal 11 a user information storage unit deactivation notice to the effect that the use of the user information storage unit 52 has been prohibited (step S223).

As a result, the user of the mobile terminal 11 can confirm that the use of the user information storage unit 51 has been prohibited.

### [2.3.1.7.1] The case in which the user information storage unit is deactivated by distribution management server

In the case where the user information storage unit is deactivated by the distribution management server 16A by itself, the user information storage unit 51 is prohibited from use (deactivated), and sends a user information storage unit deactivation notice to the mobile terminal 11 indicating that the use of the user information storage unit 51 is prohibited (step S223).

### [2.3.1.8] The case in which the use of the program stored in UIM basic block is prohibited

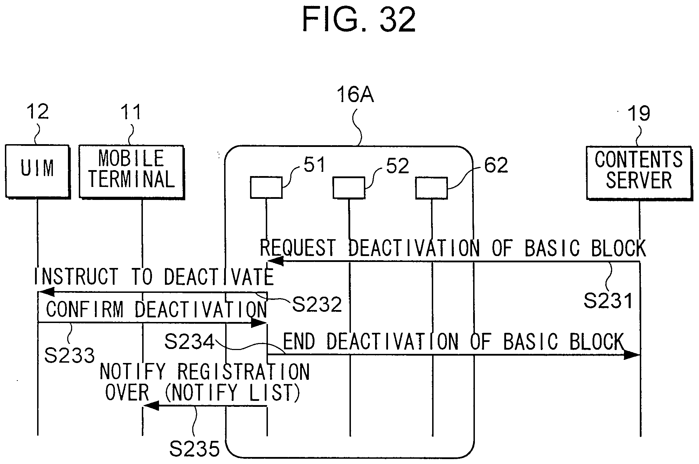

Now, the process for deactivation of basic block for prohibiting the use of a program stored in the basic blocks 40-1 to 40-7 or the free basic block 40-F1 of the UIM 12 will be explained with reference to Fig. 32.

This process is carried out in the case where the mobile terminal 11 is stolen or the contents provider requests the user to prohibit the use thereof. Once this process is carried out, the user is prohibited from using the programs stored in the basic blocks (including the free basic block) involved. The description that follows deals with the case in which the user service server 65 in charge of user services, taking an appropriate measure such as when the mobile terminal 11 is stolen, requests the process for deactivating the basic blocks based on the report from the user.

Fig. 32 shows a sequence of the deactivation process for the basic blocks.

First, the user service server 65 sends a basic block deactivation request to the user information storage unit 51 of the distribution management server 16A (step S231).

The user information storage unit 51, upon receipt of the basic block deactivation request, sends a deactivation instruction to the UIM 12 (step S232).

As a result, the UIM 12 deactivates the basic blocks meeting the basic block deactivation request, and gives a basic block deactivation response indicating that the use of the basic blocks has been prohibited (step S233).

Then, the user information storage unit 51 gives a basic block deactivation end notice to the user service server 65 indicating that the use of the basic blocks of the UIM 12 has been prohibited (step S234).

Further, the user information storage unit 51 gives a user information storage unit list to the mobile terminal 11 indicating that the use of the basic blocks (which may include the free basic block) is prohibited, thereby ending the process (step S235).

### [2.4] Effects of second embodiment

As described above, according to the second embodiment, programs can be distributed beyond the limit of the number of the storage areas of the storage module (UIM), and the operating convenience on the part of the user is improved.

Also, the distribution management server can easily manage the activation/deactivation of the program distributed, and the distribution and the activation/deactivation of the program ready for distribution.

### [3] Modifications of embodiments

### [3.1] First modification

The foregoing description deals with the case in which a single distribution management server is involved. Nevertheless, a plurality of distribution management servers can be provided for distributed processing.

In such a case, the programs stored in each UIM and the information on the storage area of each program can be stored in a common database.

### [3.2] Second modification

Apart from the foregoing description, dealing with the case in which the distribution management server is connected directly to a line switching network, the distribution management server can be connected to the line switching network through an internet making up a packet switching network and an internet gateway.

### [3.3] Third modification

Although only the UIM is described above as a storage module, the invention is also applicable to various IC card memories with equal effect. In this case, the storage module can be arranged at a fixed terminal as well as at a mobile terminal.

## Claims

1. A program distribution system comprising:
at least a mobile terminal (11) having means (34) for transmitting a program distribution request;
a storage module (12) built in or connected to said mobile terminal (11);
a contents server (19) for receiving said distribution request and transmitting a program to be distributed; and
a distribution management server (16) for receiving said program from said contents server (19), and only in a case where said contents server (19) is a contents server authorized to distribute said program, transmitting said program received from said contents server (19) to said storage module (12) built in or connected to said mobile terminal (11); wherein
said storage module (12) includes
a storage unit (12B), and
a control unit (30) for storing in said storage unit (12B) said program received from said distribution management server (16) through said mobile terminal (11) and, in compliance with a request, executing said program stored in said storage unit (12B).

2. A program distribution system as set forth in claim 1, further comprising an authentication server (18) for storing a first encryption key unique to said storage module (12),
**characterized in that** said control unit (30) of said storage module (12) decrypts said program encrypted by said first encryption key and, only in a case where decryption is successful, said program obtained by decryption is stored in said storage unit (12B),
said contents server (19), upon receipt of said distribution request, acquires said first encryption key from said authentication server (18) and, using said first encryption key, encrypts said program to be distributed, said contents server (19) further encrypting said program using a second encryption key obtained in advance and transmitting it to said distribution management server (16), and
said distribution management server (16) decrypts said encrypted program received from said contents server (19), using said second encryption key, generates a program encrypted only by said first encryption key and, only in a case where said decryption is successful, transmits said program obtained by said decryption to said storage module (12).

3. A program distribution system as set forth in claim 1, **characterized in that** said storage module (12) stores a program and data used by said program.

4. A program distribution system as set forth in claim 1, **characterized in that** said distribution management server (16) includes a charge processing unit for starting a charge process at a time of distributing a program to said storage module (12).

5. A program distribution system as set forth in claim 4, **characterized in that** said charge processing unit charges for rental of said storage module (12).

6. A program distribution system as set forth in claim 1, **characterized in that** said distribution management server (16) includes a charge processing unit for starting said charge process at a time of holding a program for said storage module (12).

7. A program distribution system as set forth in claim 6, **characterized in that** said charge processing unit charges for rental of said storage module (12).

8. A program distribution system as set forth in claim 1, **characterized in that** said distribution management server (16) transmits an activation instruction to said storage module (12) at the request of another device, and
said storage module (12), upon receipt of said activation instruction, is ready to execute said program stored in said storage module (12) and designated by said activation instruction.

9. A program distribution system as set forth in claim 1, **characterized in that** said distribution management server (16) transmits a deactivation instruction to said storage module (12) at a request of another device, and
said storage module (12), upon receipt of said deactivation instruction, deactivates said program stored in said storage module (12) and designated by said deactivation instruction.

10. A program distribution system as set forth in claim 1, **characterized in that** said distribution management server (16) transmits a deletion instruction to said storage module (12) at said request of another device, and
said storage module (12), upon receipt of said deletion instruction, deletes the program designated by said deletion instruction from said storage module (12).

11. A program distribution system as set forth in claim 1, **characterized in that** said distribution management server (16) includes means for managing a state of said program in said storage module (12) based on information sent to said storage module (12).

12. A program distribution system as set forth in claim 1, **characterized in that** said distribution management server (16) acquires version information for said storage module (12) and determines whether said program is to be distributed or not, based on said version information.

13. A program distribution system as set forth in claim 1, **characterized in that** said mobile terminal (11) includes a first communication unit for communication utilizing a mobile communication network, and a second communication unit different from said first communication unit, and
said control unit (30) of said storage module (12) includes means for communication utilizing said second communication unit in accordance with said program stored in said storage module (12).

14. The program distribution system as set forth in claim 1, wherein
the distribution management server (16) is adapted to receive said distribution request, and in a case where said program to be distributed is provided by said contents server (19), to acquire said program and transmit it to said storage module (12) built in or connected to said mobile terminal.

15. A program distribution system as set forth in claim 14, **characterized in that** said distribution management server (16) includes a real distribution information storage unit (54) for storing pointer data for specifying a program sent to said storage module (12).

16. A program distribution system as set forth in claim 15, **characterized in that** said storage unit (12B) of said storage module (12) includes a plurality of basic blocks for storing programs, and said real distribution information storage unit (54) of said distribution management server (16) includes a plurality of areas corresponding to a plurality of said basic blocks.

17. A program distribution system as set forth in claim 16, **characterized in that** said distribution management server (16) includes a virtual distribution information storage unit (55) for storing said pointer data for specifying a program capable of being distributed to said storage module (12) but not currently stored in said storage module (12), and upon receipt of request of distribution, to said storage module (12), of a program specified by said pointer data stored in said virtual distribution information storage unit (55), said program is distributed to said storage module (12) and, said pointer data for specifying said program is moved from said virtual distribution information storage unit (55) to said real distribution information storage unit (54).

18. A program distribution system as set forth in claim 16, **characterized in that** said distribution management server (16) includes a program information storage unit (52) for storing selected one of address information indicating a location of a program capable of being acquired from said contents server (19) and a program acquired from said contents server (19) and, upon receipt of a request for distribution, to said storage module (12), of a program specified by said pointer data stored in selected one of said real distribution information storage unit (54) and said virtual distribution information storage unit, said program is acquired using said program information storage unit (52) and is distributed to said storage module (12).

19. A program distribution system as set forth in claim 17, **characterized in that** said mobile terminal (11) includes means for transmitting a menu list request, and
said distribution management server (16), in compliance with said menu list request, accesses said pointer data stored in said real distribution information storage unit (54) and said virtual distribution information storage unit (55) for said storage module (12) built in or connected to said mobile terminal, generates a list of programs specified by said pointer data, and transmitting said list to said mobile terminal.

20. A program distribution system as set forth in claim 14, **characterized in that**
said mobile terminal (11) includes a first communication unit for communication utilizing a mobile communication network, and a second communication unit different from said first communication unit; and
said control unit (30) of said storage module (12) includes means for communication utilizing said second communication unit in accordance with a program stored in said storage module (12).

21. A distribution management server (16), comprising:
a program information storage unit (52) for storing selected one of a program acquired in advance from an authorized contents server (19) and address information thereof;
a real distribution information storage unit (54) for storing pointer data indicating a stored position, in said program information storage unit (52), of a program which is said program stored in a storage module (12) built in or connected to a mobile terminal, said storage module including a control unit for storing said program received from said distribution management server through said mobile terminal and, in compliance with a request, executing said program stored in said storage unit" or in a case where address information of said program is stored in said program information storage unit (52), a selected one of said program and said address information thereof;
a virtual distribution information storage unit (55) for storing pointer data indicating said stored position of a program in said program information storage unit (52), in a case where a program which is said program distributable to said storage module (12) but not currently stored in said storage module (12), or address information thereof is stored in said program information storage unit (52); and
means for acquiring a program specified by said pointer data stored in said virtual distribution information storage unit (55), utilizing said program information storage unit (52) in accordance with a request from said mobile terminal, and distributing said program to said storage module (12), and moving said pointer data to said real distribution information storage unit (54).

22. A program distribution method, comprising:
a step of a mobile terminal (11) transmitting a program distribution request to a contents server (19), a storage module (12) being built in or connected to said mobile terminal, said storage module including a control unit for storing said program received from said distribution management server through said mobile terminal and, in compliance with a request, executing said program stored in said storage unit;
a step of said contents server (19) receiving said distribution request and transmitting a program to be distributed, to a distribution management server (16); and
a step of transmitting said program to said storage module (12) built in or connected to said mobile terminal (11) to which said distribution request is transmitted, in a case where said contents server (19) transmitting said program is an contents server (19) authorized to distribute said program.

23. A program for causing a computer of a distribution management server (16) to execute:
a step of receiving a program distribution request from a mobile terminal (11)with a storage module (12) built therein or connected thereto, said storage module including a control unit for storing said program received from said distribution management server through said mobile terminal and, in compliance with a request, executing said program stored in said storage unit;
a step of determining whether a program to be distributed is provided by a contents server (19) authorized to distribute said program; and
a step of acquiring said program to be distributed and transmitting it to a storage module (12) built in or connected to said mobile terminal (11) in a case where said program is provided by an authorized contents server (19).

## Patentansprüche

1. Programmverteilungssystem, umfassend:
mindestens ein mobiles Endgerät (11) mit Mitteln (34) zum Übertragen einer Programmverteilungsanfrage;
ein Speichermodul (12), das in das mobile Endgerät (11) integriert oder mit diesem verbunden ist;
einen Inhaltsserver (19) zum Empfangen der Verteilungsanfrage und Übertragen eines zu verteilenden Programms; und
einen Verteilungsverwaltungsserver (16) zum Empfangen des Programms von dem Inhaltsserver (19), und nur in einem Fall, in dem es sich bei dem Inhaltsserver (19) um einen Inhaltsserver handelt, der dazu autorisiert ist, das Programm zu verteilen, Übertragen des von dem Inhaltsserver (19) empfangenen Programms zu dem in dem mobilen Endgerät (11) integrierten oder mit diesem verbundenen Speichermodul (12); wobei
das Speichermodul (12) Folgendes enthält
eine Speichereinheit (12B), und
eine Steuereinheit (30) zum Speichern des von dem Verteilungsverwaltungsserver (16) durch das mobile Endgerät (11) empfangenen Programms in der Speichereinheit (12B) und, in Übereinstimmung mit einer Anfrage, Ausführen des in der Speichereinheit (12B) gespeicherten Programms.

2. Programmverteilungssystem nach Anspruch 1, weiter umfassend einen Authentifizierungsserver (18) zum Speichern eines ersten Verschlüsselungsschlüssels, der für das Speichermodul (12) eindeutig ist,
**dadurch gekennzeichnet, dass** die Steuereinheit (30) des Speichermoduls (12) das mit dem ersten Verschlüsselungsschlüssel verschlüsselte Programm entschlüsselt und, nur in einem Fall, in dem die Entschlüsselung erfolgreich ist, das durch Entschlüsselung erhaltene Programm in der Speichereinheit (12B) gespeichert wird,
der Inhaltsserver (19) bei Empfang der Verteilungsanfrage den ersten Verschlüsselungsschlüssel von dem Authentifizierungsserver (18) bezieht und, unter Verwendung des ersten Verschlüsselungsschlüssels, das zu verteilende Programm verschlüsselt, wobei der Inhaltsserver (19) das Programm weiter unter Verwendung eines zuvor erhaltenen zweiten Verschlüsselungsschlüssels verschlüsselt und es zu dem Verteilungsverwaltungsserver (16) überträgt, und
der Verteilungsverwaltungsserver (16) das von dem Inhaltsserver (19) empfangene verschlüsselte Programm unter Verwendung des zweiten Verschlüsselungsschlüssels entschlüsselt, ein nur mit dem ersten Verschlüsselungsschlüssel verschlüsseltes Programm generiert und, nur in einem Fall, in dem die Entschlüsselung erfolgreich ist, das durch die Entschlüsselung erhaltene Programm zu dem Speichermodul (12) überträgt.

3. Programmverteilungssystem nach Anspruch 1, **dadurch gekennzeichnet, dass** das Speichermodul (12) ein Programm und von dem Programm genutzte Daten speichert.

4. Programmverteilungssystem nach Anspruch 1, **dadurch gekennzeichnet, dass** der Verteilungsverwaltungsserver (16) eine Gebührenverarbeitungseinheit enthält zum Starten eines Gebührenprozesses zu einem Zeitpunkt des Verteilens eines Programms an das Speichermodul (12).

5. Programmverteilungssystem nach Anspruch 4, **dadurch gekennzeichnet, dass** die Gebührenverarbeitungseinheit Gebühren für die Vermietung des Speichermoduls (12) berechnet.

6. Programmverteilungssystem nach Anspruch 1, **dadurch gekennzeichnet, dass** der Verteilungsverwaltungsserver (16) eine Gebührenverarbeitungseinheit enthält zum Starten des Gebührenprozesses zu einem Zeitpunkt des Haltens eines Programms für das Speichermodul (12).

7. Programmverteilungssystem nach Anspruch 6, **dadurch gekennzeichnet, dass** die Gebührenverarbeitungseinheit Gebühren für die Vermietung des Speichermoduls (12) berechnet.

8. Programmverteilungssystem nach Anspruch 1, **dadurch gekennzeichnet, dass** der Verteilungsverwaltungsserver (16) auf die Anfrage eines anderen Gerätes einen Aktivierungsbefehl an das Speichermodul (12) überträgt, und
das Speichermodul (12) bei Empfang des Aktivierungsbefehls bereit ist, das in dem Speichermodul (12) gespeicherte und von dem Aktivierungsbefehl benannte Programm auszuführen.

9. Programmverteilungssystem nach Anspruch 1, **dadurch gekennzeichnet, dass** der Verteilungsverwaltungsserver (16) auf eine Anfrage eines anderen Gerätes einen Deaktivierungsbefehl an das Speichermodul (12) überträgt, und
das Speichermodul (12) bei Empfang des Deaktivierungsbefehls das in dem Speichermodul (12) gespeicherte und von dem Deaktivierungsbefehl benannte Programm deaktiviert.

10. Programmverteilungssystem nach Anspruch 1, **dadurch gekennzeichnet, dass** der Verteilungsverwaltungsserver (16) auf die Anfrage eines anderen Gerätes einen Löschbefehl an das Speichermodul (12) überträgt, und
das Speichermodul (12) bei Empfang des Löschbefehls das von dem Löschbefehl benannte Programm aus dem Speichermodul (12) löscht.

11. Programmverteilungssystem nach Anspruch 1, **dadurch gekennzeichnet, dass** der Verteilungsverwaltungsserver (16) Mittel zum Verwalten eines Zustands des Programms in dem Speichermodul (12) basierend auf an das Speichermodul (12) gesendeten Informationen enthält.

12. Programmverteilungssystem nach Anspruch 1, **dadurch gekennzeichnet, dass** der Verteilungsverwaltungsserver (16) Versionsinformationen für das Speichermodul (12) bezieht und basierend auf den Versionsinformationen ermittelt, ob das Programm zu verteilen ist oder nicht.

13. Programmverteilungssystem nach Anspruch 1, dadurch gekenntzeichnet, dass das mobile Endgerät (11) eine erste Kommunikationseinheit enthält für Kommunikation unter Verwendung eines Mobilkommunikationsnetzwerks, und eine zweite Kommunikationseinheit, die von der ersten Kommunikationseinheit verschieden ist, und
die Steuereinheit (30) des Speichermoduls (12) Mittel enthält für Kommunikation unter Verwendung der zweiten Kommunikationseinheit entsprechend dem Programm, das in dem Speichermodul (12) gespeichert ist.

14. Programmverteilungssystem nach Anspruch 1, wobei
der Verteilungsverwaltungsserver (16) dazu ausgelegt ist, die Verteilungsanfrage zu empfangen und in einem Fall, in dem das zu verteilende Programm von dem Inhaltsserver (19) bereitgestellt wird, das Programm zu beziehen und es zu dem in dem mobilen Endgerät integrierten oder mit diesem verbundenen Speichermodul (12) zu übertragen.

15. Programmverteilungssystem nach Anspruch 14, **dadurch gekennzeichnet, dass** der Verteilungsverwaltungsserver (16) eine reale Verteilungsinformationen-Speichereinheit (54) enthält zum Speichern von Zeigerdaten zum Spezifizieren eines zu dem Speichermodul (12) gesendeten Programms.

16. Programmverteilungssystem nach Anspruch 15, **dadurch gekennzeichnet, dass** die Speichereinheit (12B) des Speichermoduls (12) eine Vielzahl von Basisblöcken zum Speichern von Programmen enthält, und die reale Verteilungsinformationen-Speichereinheit (54) des Verteilungsverwaltungsservers (16) eine Vielzahl von Bereichen enthält, die einer Vielzahl der Basisblöcke entspricht.

17. Programmverteilungssystem nach Anspruch 16, **dadurch gekennzeichnet, dass** der Verteilungsverwaltungsserver (16) eine virtuelle Verteilungsinformationen-Speichereinheit (55) enthält zum Speichern der Zeigerdaten zum Spezifizieren eines Programms, das an das Speichermodul (12) verteilt werden kann, aber aktuell nicht in dem Speichermodul (12) gespeichert ist, und bei Empfang einer Anfrage um Verteilung, an das Speichermodul (12), eines durch die Zeigerdaten spezifizierten Programms, das in der virtuellen Verteilungsinformationen-Speichereinheit (55) gespeichert ist, das Programm an das Speichermodul (12) verteilt wird und die Zeigerdaten zum Spezifizieren des Programms aus der virtuellen Verteilungsinformationen-Speichereinheit (55) in die reale Verteilungsinformationen-Speichereinheit (54) verschoben werden.

18. Programmverteilungssystem nach Anspruch 16, **dadurch gekennzeichnet, dass** der Verteilungsverwaltungsserver (16) eine Programminformationen-Speichereinheit (52) enthält zum Speichern eines Ausgewählten aus Adresseninformationen, die einen Ort eines Programms angeben, das von dem Inhaltsserver (19) bezogen werden kann, und einem von dem Inhaltsserver (19) bezogenen Programm, und bei Empfang einer Anfrage um Verteilung, an das Speichermodul (12), eines durch die Zeigerdaten spezifizierten Programms, das in einem Ausgewählten aus der realen Verteilungsinformationen-Speichereinheit (54) und der virtuellen Verteilungsinformationen-Speichereinheit gespeichert ist, wobei das Programm unter Verwendung der Programminformationen-Speichereinheit (52) bezogen wird und an das Speichermodul (12) verteilt wird.

19. Programmverteilungssystem nach Anspruch 17, **dadurch gekennzeichnet, dass** das mobile Endgerät (11) Mittel enthält zum Übertragen einer Menülistenanfrage, und
der Verteilungsverwaltungsserver (16), in Übereinstimmung mit der Menülistenanfrage, auf die Zeigerdaten zugreift, die in der realen Verteilungsinformationen-Speichereinheit (54) und der virtuellen Verteilungsinformationen-Speichereinheit (55) für das in dem mobilen Endgerät integrierte oder mit diesem verbundenen Speichermodul (12) gespeichert sind, eine Liste von durch die Zeigerdaten spezifizierten Programmen generiert, und die Liste an das mobile Endgerät überträgt.

20. Programmverteilungssystem nach Anspruch 14, **dadurch gekennzeichnet, dass**
das mobile Endgerät (11) eine erste Kommunikationseinheit enthält für Kommunikation unter Verwendung eines mobilen Kommunikationsnetzwerks, und eine zweite Kommunikationseinheit, die von der ersten Kommunikationseinheit verschieden ist; und
die Steuereinheit (30) des Speichermoduls (12) Mittel enthält für Kommunikation unter Verwendung der zweiten Kommunikationseinheit entsprechend einem Programm, das in dem Speichermodul (12) gespeichert ist.

21. Verteilungsverwaltungsserver (16), umfassend:
eine Programminformationen-Speichereinheit (52) zum Speichern eines Ausgewählten aus einem zuvor von einem autorisierten Inhaltsserver (19) bezogenem Programm und Adresseninformationen davon;
eine reale Verteilungsinformationen-Speichereinheit (54) zum Speichern von Zeigerdaten, die eine gespeicherte Position in der Programminformationen-Speichereinheit (52) von einem Programm angeben, bei dem es sich um das Programm handelt, das in einem Speichermodul (12) gespeichert ist, das in einem mobilen Endgerät integriert oder damit verbunden ist, wobei das Speichermodul eine Steuereinheit enthält zum Speichern des von dem Verteilungsverwaltungsserver empfangenen Programms durch das mobile Endgerät und, in Übereinstimmung mit einer Anfrage, Ausführen des in der Speichereinheit gespeicherten Programms, oder in einem Fall, in dem Adresseninformationen des Programms in der Programminformationen-Speichereinheit (52) gespeichert sind, eines Ausgewählten aus dem Programm und den Adresseninformationen davon;
eine virtuelle Verteilungsinformationen-Speichereinheit (55) zum Speichern von Zeigerdaten, die die gespeicherte Position von einem Programm in der Programminformationen-Speichereinheit (52) angeben in einem Fall, in dem es sich bei einem Programm um das Programm handelt, das an das Speichermodul (12) verteilbar, aber aktuell nicht in dem Speichermodul (12) gespeichert ist, oder Adresseninformationen davon in der Programminformationen-Speichereinheit (52) gespeichert sind; und
Mittel zum Beziehen eines Programms, das durch die in der virtuellen Verteilungsinformationen-Speichereinheit (55) gespeicherten Zeigerdaten spezifiziert ist, Verwenden der Programminformationen-Speichereinheit (52) entsprechend einer Anfrage von dem mobilen Endgerät, und Verteilen des Programms an das Speichermodul (12), und Verschieben der Zeigerdaten in die reale Verteilungsinformationen-Speichereinheit (54).

22. Programmverteilungsverfahren, umfassend:
einen Schritt des Übertragens, durch das mobile Endgerät (11), einer Programmverteilungsanfrage an einen Inhaltsserver (19), wobei ein Speichermodul (12) in das mobile Endgerät integriert oder mit diesem verbunden ist, wobei das Speichermodul eine Steuereinheit enthält zum Speichern des von dem Verteilungsverwaltungsserver empfangenen Programms durch das mobile Endgerät und, in Übereinstimmung mit einer Anfrage, Ausführen des in der Speichereinheit gespeicherten Programms;
einen Schritt des Empfangens, durch den Inhaltsserver (19), der Verteilungsanfrage und des Übertragens eines zu verteilenden Programms zu einem Verteilungsverwaltungsserver (16); und
einen Schritt des Übertragens des Programms zu dem Speichermodul (12), das in dem mobilen Endgerät (11), an das die Verteilungsanfrage übertragen wird, integriert oder mit diesem verbunden ist, in einem Fall, in dem es sich bei dem das Programm übertragenden Inhaltsserver (19) um einen Inhaltsserver (19) handelt, der dazu autorisiert ist, das Programm zu verteilen.

23. Programm zum Veranlassen eines Rechners eines Verteilungsverwaltungsservers (16) dazu, auszuführen:
einen Schritt des Empfangens einer Programmverteilungsanfrage von einem mobilen Endgerät (11) mit einem darin integrierten oder damit verbundenen Speichermodul (12), wobei das Speichermodul eine Steuereinheit enthält zum Speichern des von dem Verteilungsverwaltungsserver empfangenen Programms durch das mobile Endgerät und, in Übereinstimmung mit einer Anfrage, Ausführen des in der Speichereinheit gespeicherten Programms;
einen Schritt des Ermittelns, ob ein zu verteilendes Programm von einem Inhaltsserver (19) bereitgestellt wird, der dazu autorisiert ist, das Programm zu verteilen; und
einen Schritt des Beziehens des zu verteilenden Programms und seines Übertragens zu einem in dem mobilen Endgerät (11) integrierten oder damit verbundenen Speichermodul (12) in einem Fall, in dem das Programm durch einen autorisierten Inhaltsserver (19) bereitgestellt wird.

## Revendications

1. Système de distribution de programme comprenant :
au moins un terminal mobile (11) ayant des moyens (34) pour transmettre une demande de distribution de programme;
un module de stockage (12) intégré ou relié audit terminal mobile (11) ;
un serveur de contenus (19) pour recevoir ladite demande de distribution et transmettre un programme à distribuer; et
un serveur de gestion de distribution (16) pour recevoir ledit programme en provenance dudit serveur de contenus (19), et seulement dans un cas où ledit serveur de contenus (19) est un serveur de contenus autorisé à distribuer ledit programme, transmettre ledit programme reçu en provenance dudit serveur de contenus (19) audit module de stockage (12) intégré ou relié audit terminal mobile (11) ; dans lequel
ledit module de stockage (12) inclut
une unité de stockage (12B), et
une unité de commande (30) pour stocker dans ladite unité de stockage (12B) ledit programme reçu en provenance dudit serveur de gestion de distribution (16) par l'intermédiaire dudit terminal mobile (11) et, conformément à une demande, exécuter ledit programme stocké dans ladite unité de stockage (12B).

2. Système de distribution de programme selon la revendication 1, comprenant en outre un serveur d'authentification (18) pour stocker une première clé de chiffrement propre audit module de stockage (12),
**caractérisé en ce que** ladite unité de commande (30) dudit module de stockage (12) déchiffre ledit programme chiffré par ladite première clé de chiffrement et, seulement dans un cas où le déchiffrement a réussi, ledit programme obtenu par déchiffrement est stocké dans ladite unité de stockage (12B),
ledit serveur de contenus (19), à réception de ladite demande de distribution, acquiert ladite première clé de chiffrement depuis ledit serveur d'authentification (18) et, à l'aide de ladite première clé de chiffrement, chiffre ledit programme à distribuer, ledit serveur de contenus (19) chiffrant en outre ledit programme à l'aide d'une seconde clé de chiffrement obtenue à l'avance et le transmettant audit serveur de gestion de distribution (16), et
ledit serveur de gestion de distribution (16) déchiffre ledit programme chiffré reçu en provenance dudit serveur de contenus (19), à l'aide de ladite seconde clé de chiffrement, génère un programme chiffré seulement par ladite première clé de chiffrement et, seulement dans un cas où ledit déchiffrement a réussi, transmet ledit programme obtenu par ledit déchiffrement audit module de stockage (12).

3. Système de distribution de programme selon la revendication 1, **caractérisé en ce que** ledit module de stockage (12) stocke un programme et des données utilisées par ledit programme.

4. Système de distribution de programme selon la revendication 1, **caractérisé en ce que** ledit serveur de gestion de distribution (16) inclut une unité de traitement de facturation pour lancer un processus de facturation lors de la distribution d'un programme audit module de stockage (12).

5. Système de distribution de programme selon la revendication 4, **caractérisé en ce que** ladite unité de traitement de facturation facture la location dudit module de stockage (12).

6. Système de distribution de programme selon la revendication 1, **caractérisé en ce que** ledit serveur de gestion de distribution (16) inclut une unité de traitement de facturation pour lancer ledit processus de facturation lors de la détention d'un programme pour ledit module de stockage (12).

7. Système de distribution de programme selon la revendication 6, **caractérisé en ce que** ladite unité de traitement de facturation facture la location dudit module de stockage (12).

8. Système de distribution de programme selon la revendication 1, **caractérisé en ce que** ledit serveur de gestion de distribution (16) transmet une instruction d'activation audit module de stockage (12) à la demande d'un autre dispositif, et
ledit module de stockage (12), à réception de ladite instruction d'activation, est prêt à exécuter ledit programme stocké dans ledit module de stockage (12) et désigné par ladite instruction d'activation.

9. Système de distribution de programme selon la revendication 1, **caractérisé en ce que** ledit serveur de gestion de distribution (16) transmet une instruction de désactivation audit module de stockage (12) à la demande d'un autre dispositif, et
ledit module de stockage (12), à réception de ladite instruction de désactivation, désactive ledit programme stocké dans ledit module de stockage (12) et désigné par ladite instruction de désactivation.

10. Système de distribution de programme selon la revendication 1, **caractérisé en ce que** ledit serveur de gestion de distribution (16) transmet une instruction de suppression audit module de stockage (12) à ladite demande d'un autre dispositif, et
ledit module de stockage (12), à réception de ladite instruction de suppression, supprime le programme désigné par ladite instruction de suppression en provenance dudit module de stockage (12).

11. Système de distribution de programme selon la revendication 1, **caractérisé en ce que** ledit serveur de gestion de distribution (16) inclut des moyens pour gérer un état dudit programme dans ledit module de stockage (12) sur la base d'informations envoyées audit module de stockage (12).

12. Système de distribution de programme selon la revendication 1, **caractérisé en ce que** ledit serveur de gestion de distribution (16) acquiert des informations de version pour ledit module de stockage (12) et détermine si ledit programme doit être distribué ou non, sur la base desdites informations de version.

13. Système de distribution de programme selon la revendication 1, **caractérisé en ce que** ledit terminal mobile (11) inclut une première unité de communication pour communiquer en utilisant un réseau de communication mobile, et une seconde unité de communication différente de ladite première unité de communication, et
ladite unité de commande (30) dudit module de stockage (12) inclut des moyens pour communiquer en utilisant ladite seconde unité de communication conformément audit programme stocké dans ledit module de stockage (12).

14. Système de distribution de programme selon la revendication 1, dans lequel
le serveur de gestion de distribution (16) est apte à recevoir ladite demande de distribution et, dans un cas où ledit programme à distribuer est fourni par ledit serveur de contenus (19), à acquérir ledit programme et à le transmettre audit module de stockage (12) intégré ou relié auditterminal mobile.

15. Système de distribution de programme selon la revendication 14, **caractérisé en ce que** ledit serveur de gestion de distribution (16) inclut une unité de stockage d'informations de distribution réelles (54) pour stocker des données de pointeur pour spécifier un programme envoyé audit module de stockage (12).

16. Système de distribution de programme selon la revendication 15, **caractérisé en ce que** ladite unité de stockage (12B) dudit module de stockage (12) inclut une pluralité de blocs élémentaires pour stocker des programmes, et ladite unité de stockage d'informations de distribution réelles (54) dudit serveur de gestion de distribution (16) inclut une pluralité de zones correspondant à une pluralité desdits blocs élémentaires.

17. Système de distribution de programme selon la revendication 16, **caractérisé en ce que** ledit serveur de gestion de distribution (16) inclut une unité de stockage d'informations de distribution virtuelles (55) pour stocker lesdites données de pointeur pour spécifier un programme pouvant être distribué audit module de stockage (12) mais non stocké actuellement dans ledit module de stockage (12), et à réception d'une demande de distribution, audit module de stockage (12), d'un programme spécifié par lesdites données de pointeur stockées dans ladite unité de stockage d'informations de distribution virtuelles (55), ledit programme est distribué audit module de stockage (12) et, lesdites données de pointeur pour spécifier ledit programme sont déplacées de ladite unité de stockage de d'informations de distribution virtuelles (55) à ladite unité de stockage d'informations de distribution réelles (54).

18. Système de distribution de programme selon la revendication 16, **caractérisé en ce que** ledit serveur de gestion de distribution (16) inclut une unité de stockage d'informations de programme (52) pour stocker l'un sélectionné parmi des informations d'adresse indiquant un emplacement d'un programme pouvant être acquis depuis ledit serveur de contenus (19) et un programme acquis depuis ledit serveur de contenus (19) et, à réception d'une demande de distribution, audit module de stockage (12), d'un programme spécifié par lesdites données de pointeur stockées dans l'un sélectionné parmi ladite unité de stockage d'informations de distribution réelles (54) et ladite unité de stockage d'informations de distribution virtuelles, ledit programme est acquis à l'aide de ladite unité de stockage d'informations de programme (52) et est distribué audit module de stockage (12).

19. Système de distribution de programme selon la revendication 17, **caractérisé en ce que** ledit terminal mobile (11) inclut des moyens pour transmettre une demande de liste de menu, et
ledit serveur de gestion de distribution (16), conformément à ladite demande de liste de menu, accède auxdites données de pointeur stockées dans ladite unité de stockage d'informations de distribution réelles (54) et ladite unité de stockage d'informations de distribution virtuelles (55) pour ledit module de stockage (12) intégré ou relié audit terminal mobile, génère une liste de programmes spécifiés par lesdites données de pointeur, et transmet ladite liste audit terminal mobile.

20. Système de distribution de programme selon la revendication 14, **caractérisé en ce que**
ledit terminal mobile (11) inclut une première unité de communication pour communiquer en utilisant un réseau de communication mobile, et une seconde unité de communication différente de ladite première unité de communication; et
ladite unité de commande (30) dudit module de stockage (12) inclut des moyens pour communiquer en utilisant ladite seconde unité de communication conformément à un programme stocké dans ledit module de stockage (12).

21. Serveur de gestion de distribution (16), comprenant :
une unité de stockage d'informations de programme (52) pour stocker l'un sélectionné parmi un programme acquis à l'avance depuis un serveur de contenus autorisé (19) et des informations d'adresse de celui-ci ;
une unité de stockage d'informations de distribution réelles (54) pour stocker des données de pointeur indiquant une position stockée, dans ladite unité de stockage d'informations de programme (52), d'un programme qui est ledit programme stocké dans un module de stockage (12) intégré ou relié à un terminal mobile, ledit module de stockage incluant une unité de commande pour stocker ledit programme reçu en provenance dudit serveur de gestion de distribution par l'intermédiaire dudit terminal mobile et, conformément à une demande, exécuter ledit programme stocké dans ladite unité de stockage, ou dans un cas où des informations d'adresse dudit programme sont stockées dans ladite unité de stockage d'informations de programme (52), l'un sélectionné parmi ledit programme et lesdites informations d'adresse de celui-ci ;
une unité de stockage d'informations de distribution virtuelles (55) pour stocker des données de pointeur indiquant ladite position stockée d'un programme dans ladite unité de stockage d'informations de programme (52), dans un cas où un programme qui est ledit programme pouvant être distribué audit module de stockage (12) mais non stocké actuellement dans ledit module de stockage (12), ou des informations d'adresse de celui-ci, sont stockés dans ladite unité de stockage d'informations de programme (52) ; et
des moyens pour acquérir un programme spécifié par lesdites données de pointeur stockées dans ladite unité de stockage d'informations de distribution virtuelles (55), en utilisant ladite unité de stockage d'informations de programme (52) conformément à une demande en provenance dudit terminal mobile, et distribuer ledit programmé audit module de stockage (12), et déplacer lesdites données de pointeur vers ladite unité de stockage d'informations de distribution réelles (54).

22. Procédé de distribution de programme comprenant :
une étape de transmission d'une demande de distribution de programme à un serveur de contenus (19) par un terminal mobile (11), un module de stockage (12) étant intégré ou relié audit terminal mobile, ledit module de stockage incluant une unité de commande pour stocker ledit programme reçu en provenance dudit serveur de gestion de distribution par l'intermédiaire dudit terminal mobile et, conformément à une demande, exécuter ledit programme stocké dans ladite unité de stockage ;
une étape de réception de ladite demande de distribution et de transmission d'un programme à distribuer, par ledit serveur de contenus (19), à un serveur de gestion de distribution (16) ; et
une étape de transmission dudit programme audit module de stockage (12) intégré ou relié audit terminal mobile (11) auquel est transmise ladite demande de distribution, dans un cas où ledit serveur de contenus (19) transmettant ledit programme est un serveur de contenus (19) autorisé à distribuer ledit programme.

23. Programme pour amener un ordinateur d'un serveur de gestion de distribution (16) à exécuter :
une étape de réception d'une demande de distribution de programme en provenance d'un terminal mobile (11) auquel est intégré ou relié un module de stockage (12), ledit module de stockage incluant une unité de commande pour stocker ledit programme reçu en provenance dudit serveur de gestion de distribution par l'intermédiaire dudit terminal mobile et, conformément à une demande, exécuter ledit programme stocké dans ladite unité de stockage;
une étape de détermination si un programme à distribuer est fourni par un serveur de contenus (19) autorisé à distribuer ledit programme ; et
une étape d'acquisition dudit programme à distribuer et de sa transmission à un module de stockage (12) intégré ou relié audit terminal mobile (11) dans un cas où ledit programme est fourni par un serveur de contenus autorisé (19).
